# EUROPEAN PATENT SPECIFICATION

(11) **EP 4 068 704 B1**
(45) Date of publication and mention of the grant of the patent: **25.02.2026**
(21) Application number: 20912260.5
(22) Date of filing: 12.10.2020
(51) Int. Cl.: H04L 12/46, H04L 45/50, H04L 45/02, H04L 45/00

(54) **PACKET SENDING METHOD, ROUTING TABLE ENTRY GENERATION METHOD, DEVICE, AND STORAGE MEDIUM**
PAKETSENDEVERFAHREN, VERFAHREN ZUR ERZEUGUNG VON ROUTING-TABELLENEINTRÄGEN, VORRICHTUNG UND SPEICHERMEDIUM
PROCÉDÉ D'ENVOI DE PAQUET, PROCÉDÉ DE GÉNÉRATION D'ENTRÉE DE TABLE DE ROUTAGE, DISPOSITIF ET SUPPORT DE STOCKAGE

(30) Priority: 08.01.2020 CN 202010019657
(43) Date of publication of application: 05.10.2022
(73) Proprietor: Huawei Technologies Co., Ltd., Shenzhen, Guangdong 518129, (CN)
(72) Inventor: FANG, Yonglong, Shenzhen, Guangdong 518129 (CN); HE, Hongwei, Shenzhen, Guangdong 518129 (CN)
(74) Representative: Körber, Martin Hans
(86) International application number: PCT/CN2020/120460
(87) International publication number: WO 2021/139289

(56) References cited:
- WO-A1-2010/025658
- WO-A1-2018/188337
- CN-A- 101 668 324
- CN-A- 110 166 361
- CN-A- 110 461 018
- US-A1- 2012 137 358
- US-A1- 2013 058 335
- US-A1- 2019 289 525

## Description

### TECHNICAL FIELD

This application relates to the field of communications technologies, and in particular, to a packet sending method, a routing entry generation method, an apparatus, and a storage medium.

### BACKGROUND

A software-defined wide area network (Software Defined WAN, SD-WAN) is an important practice of software defined networking (software defined networking, SDN). In the SD-WAN, a tunnel may be usually established between two network devices by using an overlay (Overlay) technology, and further a packet is sent through the tunnel. However, in the overlay technology, a next-hop device cannot be connected due to factors such as conversion between public and private network addresses. As a result, a packet cannot be sent based on an address of the next-hop device. Therefore, how to send a packet in the SD-WAN becomes an urgent problem to be resolved currently.

In a related technology, a port of the next-hop device may be used for implementation. To be specific, a site prefix of a site in which the next-hop device is located and a port identifier of the next-hop device may be stored in a routing table as a routing entry, and the port identifier of the next-hop device and a tunnel identifier of a tunnel established to the next-hop device through the port are stored in a tunnel table as a tunnel entry. In this way, when a data packet is received, a destination address carried in the data packet may be matched with routing entries in the routing table. If the destination address of the data packet matches a routing entry in the routing table, a corresponding tunnel entry may be found from the tunnel table based on a port identifier included in the routing entry. If the port identifier included in the routing entry matches a tunnel entry in the tunnel table, the data packet may be sent through a tunnel identified by the tunnel identifier included in the tunnel entry.

A network device usually includes a plurality of ports. Therefore, according to the foregoing method, the routing table may store a plurality of routing entries related to the network device. As a result, a large quantity of duplicate routing entries exist. In addition, after a status of the network device changes, the routing table is updated, and network performance is affected.

US 2013/0058335 A1 discloses a method for packet processing through a network. The method determines whether a packet destined for a network host associated with a logical data path set is a known packet. When the packet is a known packet, the method forwards the packet to a managed switching element in a set of managed edge switching elements for forwarding to the network host. Otherwise, the method forwards the packet to a managed switching element in a set of managed non-edge switching elements for further processing.

WO 2010/025658 A1 discloses a a routing method including obtaining a packet with ID information, finding the matched path ID based on the ID information, if a matched next hop station ID based on the path ID is found, transmitting the packet to the station corresponding to the next hop station ID.

### SUMMARY

This application provides a packet sending method, an apparatus, and a storage medium, to resolve a problem in a related technology that a large quantity of duplicate routing entries exist, and a routing table is updated after a status of a network device changes, so as to reduce impact on network performance. The invention is defined in the independent claims. Additional features of the invention are provided in the dependent claims. In the following, parts of the description and drawings referring to embodiments which are not covered by the claims are not presented as embodiments of the invention, but as examples useful for understanding the invention. The technical solutions are as follows.

According to a first aspect, a packet sending method is provided. A first network device stores a routing table, the routing table includes a plurality of routing entries, and each of the plurality of routing entries includes a site prefix and a corresponding site identifier. In this case, the first network device receives a first data packet. The first network device determines a target routing entry from the routing table based on a destination address. The destination address matches a site prefix included in the target routing entry, and a site identifier included in the target routing entry is used to identify a second site. The first network device sends the first data packet to a network device deployed in the second site.

The first data packet carries the destination address, and the first network device is a network device deployed in a first site.

In this application, each routing entry in the routing table stored in the first network device in the first site includes a site prefix and a corresponding site identifier. Therefore, when receiving the first data packet, the first network device may determine the target routing entry from the routing table. Because the site identifier in the target routing entry is used to identify the second site, the first network device may directly send the first data packet to the second site based on the site identifier in the target routing entry. That is, the first network device may directly send, to the second site based on the site identifier of the second site, a data packet sent from the first site to the second site, without determining a port that is of a network device in the second site and that the data packet is specifically sent to. In addition, the first network device may store only one routing entry for one site. This avoids a large quantity of duplicate routing entries, and can also avoid updating of a routing table caused by a change of a status of a network device.

Optionally, when the first network device sends the first data packet to the network device deployed in the second site, the first network device determines one or more tunnel entries based on the site identifier included in the target routing entry, where the one or more tunnel entries are tunnel entries corresponding to tunnels established between the first site and the second site. The first network device selects a tunnel entry from the one or more tunnel entries as a target tunnel entry. The first network device sends the first data packet through a tunnel corresponding to the target tunnel entry.

Optionally, when the first network device determines the one or more tunnel entries based on the site identifier included in the target routing entry, the first network device determines one or more tunnel identifiers based on the site identifier included in the target routing entry, where the one or more tunnel identifiers are identifiers of the tunnels established between the first site and the second site. The first network device determines the one or more tunnel entries from a tunnel table based on the one or more tunnel identifiers.

The first network device stores one tunnel table, each tunnel entry in the tunnel table includes a tunnel identifier and corresponding tunnel attribute information, the tunnel table stores tunnel entries corresponding to a plurality of sites, the plurality of sites are sites that establish tunnels with the first site, and the plurality of sites include the second site.

In this case, the first network device may determine the one or more tunnel identifiers based on the site identifier included in the target routing entry. The one or more tunnel identifiers are identifiers of the tunnels established between the first site and the second site. Then, the first network device may determine the one or more tunnel entries from the tunnel table based on the one or more tunnel identifiers.

It should be noted that the tunnel attribute information included in each tunnel entry may include a tunnel encapsulation manner, a source address and a destination address of a tunnel, a bandwidth of the tunnel, a delay of the tunnel, and the like. In addition, in some cases, the first network device may store a first mapping relationship between a site identifier and a tunnel identifier. To be specific, the first mapping relationship stores an identifier of each site that establishes a tunnel with the first site, and an identifier of the tunnel established between each site and the first site. In this way, the first network device may determine the one or more tunnel identifiers from the first mapping relationship based on the site identifier included in the target routing entry. Then, the first network device may determine, from the tunnel table, tunnel entries that include tunnel identifiers the same as the one or more tunnel identifiers, to obtain the one or more tunnel entries.

Optionally, when the first network device determines the one or more tunnel entries based on the site identifier included in the target routing entry, the first network device determines an identifier of a target tunnel table based on the site identifier included in the target routing entry, where the target tunnel table is a tunnel table corresponding to the second sites in a plurality of tunnel tables. The first network device determines the target tunnel table from the plurality of tunnel tables based on the identifier of the target tunnel table, and determines tunnel entries stored in the target tunnel table as the one or more tunnel entries.

The first network device stores the plurality of tunnel tables, the plurality of tunnel tables one-to-one correspond to a plurality of sites, the plurality of sites are sites that establish tunnels with the first site, and the plurality of sites include the second site.

In this case, the first network device may determine the identifier of the target tunnel table based on the site identifier included in the target routing entry. The target tunnel table is a tunnel table corresponding to the second site in the plurality of tunnel tables. Then, the first network device may determine the target tunnel table from the plurality of tunnel tables based on the identifier of the target tunnel table, and determine the tunnel entries stored in the target tunnel table as the one or more tunnel entries.

The first network device stores different tunnel tables for different sites, and the first network device may store a second mapping relationship between a site identifier and a tunnel table identifier. To be specific, the second mapping relationship stores an identifier of each site that establishes a tunnel with the first site, and an identifier of a tunnel table corresponding to each site. In this way, the first network device may determine the identifier of the target tunnel table from the second mapping relationship based on the site identifier included in the target routing entry. Then, the target tunnel table may be determined from the plurality of tunnel tables based on the identifier of the target tunnel table, and the tunnel entries in the target tunnel table are further determined as the one or more tunnel entries.

After determining the one or more tunnel entries based on the site identifier included in the target routing entry, the first network device may select a tunnel entry from the one or more tunnel entries as a target tunnel entry according to a tunnel selection policy.

It should be noted that when there is no tunnel entry that meets the tunnel selection policy in the one or more tunnel entries, that is, when the first network device cannot select a target tunnel entry from the one or more tunnel entries according to the tunnel selection policy, the first network device may discard the first data packet. Alternatively, the first network device may select a tunnel entry from the one or more tunnel entries as the target tunnel entry according to a hash algorithm.

Optionally, each of the one or more tunnel entries further includes a connection identifier, and the connection identifier is used to indicate whether a corresponding tunnel is connected. Based on this, when the first network device selects a tunnel entry from the one or more tunnel entries as the target tunnel entry, the first network device selects tunnel entries with connection identifiers set to valid from the one or more tunnel entries, and the first network device selects a tunnel entry from the selected tunnel entries as the target tunnel entry.

After selecting the target tunnel entry, the first network device may obtain the tunnel identifier included in the target tunnel entry, use a tunnel identified by the tunnel identifier as a target tunnel, and send the first data packet through the target tunnel.

It should be noted that, because the tunnel table includes all tunnels established between network devices in the first site and the network device in the second site, the target tunnel determined by the first network device may be a tunnel established between the first network device and the network device in the second site or a tunnel established between a second network device and the network device in the second site. The second network device is a network device other than the first network device in the first site.

In some possible cases, if the target tunnel is a tunnel established between the first network device and the network device in the second site, the first network device may directly obtain tunnel attribute information of the target tunnel from a target tunnel entry stored in the first network device, further perform tunnel encapsulation on the first data packet based on the obtained tunnel attribute information to obtain a second data packet, and send the second data packet through the target tunnel.

In other possible cases, if the target tunnel is a tunnel established between the second network device and the network device in the second site, the first network device may add a tunnel identifier of the target tunnel to the first data packet to obtain a third data packet, and send the third data packet to the second network device through a physical link between the first network device and the second network device. After the second network device receives the third data packet, the second network device may parse the tunnel identifier of the target tunnel and the first data packet from the third data packet. Then, the second network device may obtain, based on the tunnel identifier of the target tunnel, tunnel attribute information of the target tunnel from a target tunnel entry stored in the second network device, further perform tunnel encapsulation on the first data packet based on the obtained tunnel attribute information to obtain a second data packet, and send the second data packet through the target tunnel.

According to a second aspect, a routing entry generation method is provided. The method is performed by a first network device, and the first network device is deployed in a first site. In this way, the first network device obtains a site prefix and a site identifier, where the site identifier is used to identify a second site, and a network address of a second network device matches the site prefix. The first network device adds a first routing entry to a routing table of the first network device, where the first routing entry includes the site prefix and the site identifier, and the first routing entry is used to send a data packet to the second network device.

In this application, the site identifier obtained by the first network device is used to identify the second site, and the network address of the second network device matches the site prefix obtained by the first network device. That is, a data packet may be sent to the second network device by using the site prefix and the site identifier that are obtained by the first network device. Therefore, the first network device may add the obtained site prefix and site identifier to the stored routing table as the first routing entry. In this way, the first network device may store only one routing entry for one site, to avoid a large quantity of duplicate routing entries, and also avoid updating of a routing table caused by a change of a status of a network device.

It should be noted that, the second network device may be deployed in the second site, or may be deployed in a third site. In addition, the first network device may directly communicate with the second network device, or may communicate with the second network device through forwarding by another network device. Therefore, the following three cases are described.

Case 1: The second network device is deployed in the second site, and the first network device and the second network device access one or more same transport networks.

In this case, the second network device is located in the second site, the site identifier obtained by the first network device is used to identify the second site, and the network address of the second network device matches the site prefix obtained by the first network device. Therefore, it may be determined that the site prefix and the site identifier that are obtained by the first network device are a site prefix and a site identifier of the second site.

It should be noted that, after being powered on, the second network device may register with a control device, to obtain configuration information of the second network device from the control device. The configuration information may include the site identifier and the site prefix of the second site, TNP information of the second network device, and the like. Then, the second network device may send the site prefix and the site identifier of the second site to the control device. After receiving the site prefix and the site identifier of the second site that are sent by the second network device, the control device may determine, based on a network topology structure, that network devices that access a same transport network as the second network device include the first network device. That is, the second network device can communicate with the first network device. Therefore, the control device may send the site prefix and the site identifier of the second site to the first network device.

Optionally, after the first network device adds the first routing entry to the routing table of the first network device, the first network device obtains one or more pieces of transport network port TNP information of the second network device, where the one or more pieces of TNP information one-to-one correspond to the one or more transport networks. The first network device establishes a tunnel between the first network device and the second network device based on the one or more pieces of TNP information. The first network device stores a tunnel identifier of each established tunnel and corresponding tunnel attribute information as a tunnel entry.

In this application, when sending the site prefix and the site identifier of the second site to the control device, the second network device further sends the TNP information of the second network device. In this way, when receiving the site prefix and the site identifier of the second site that are sent by the control device, the first network device may further receive the one or more pieces of TNP information of the second network device. The one or more pieces of TNP information one-to-one correspond to the one or more transport networks. That is, the one or more pieces of TNP information are TNP information corresponding to the one or more same transport networks accessed by the first network device and the second network device.

The TNP information is used to indicate an externally accessible physical port or logical port and a parameter required in a communications process. For example, the TNP information may include a network operator identifier, an encryption mode, whether there is network address translation, and a routing domain of a corresponding transport network.

After receiving the one or more pieces of TNP information of the second network device, the first network device may match TNP information of the first network device with the one or more pieces of TNP information. If one piece of TNP information of the first network device can successfully match one piece of TNP information of the second network device, the first network device and the second network device may establish a tunnel between the first network device and the second network device by using the successfully-matched pair of TNP information.

In this application, whether the TNP information of the first network device can successfully match the TNP information of the second network device is determined by using a matching condition. That is, when one piece of TNP information of the first network device and one piece of TNP information of the second network device meet the matching condition, it may be determined that the TNP information of the first network device can successfully match the TNP information of the second network device.

The matching condition may be set according to an actual situation. In an example, the matching condition may mean that some data included in the two pieces of TNP information is the same. For example, network operator identifiers included in the two pieces of TNP information are the same, or routing domains of transport networks corresponding to the two pieces of TNP information are the same. In another example, the matching condition may mean that all information included in the two pieces of TNP information is the same.

It should be noted that when there are a plurality of successfully-matched pairs of TNP information in the TNP information of the first network device and the TNP information of the second network device, a plurality of tunnels may be established between the first network device and the second network device.

In a possible case, after the tunnel between the first network device and the second network device is established according to the foregoing steps, the first network device may directly store the tunnel identifier of each established tunnel and the corresponding tunnel attribute information as a tunnel entry.

It can be learned from the foregoing that the first network device may store one tunnel table, or may store a plurality of tunnel tables. When the first network device stores one tunnel table, after a tunnel is established between the first network device and the second network device, the first network device may add a tunnel identifier of each tunnel and corresponding tunnel attribute information to the tunnel table as a tunnel entry, and store a first mapping relationship between the site identifier of the second site and a tunnel identifier. When the first network device stores a plurality of tunnel tables, the first network device may search, based on the site identifier of the second site, a second mapping relationship between a site identifier and a tunnel table identifier for an identifier of a tunnel table corresponding to the second site. If the tunnel table identifier corresponding to the second site is found, the first network device may add a tunnel identifier of each currently established tunnel and corresponding tunnel attribute information to the tunnel table corresponding to the second site as a tunnel entry. If the tunnel table identifier corresponding to the second site is not found, the first network device may establish a tunnel table, add a tunnel identifier of each currently established tunnel and corresponding tunnel attribute information to the established tunnel table as a tunnel entry, and store a second mapping relationship between the site identifier of the second site and a tunnel table identifier of the tunnel table.

Optionally, one or more third network devices are further deployed in the first site, each of the one or more third network devices establishes a tunnel with a network device in the second site, and each of the one or more third network devices further establishes a physical link with the first network device. In this way, the first network device may further obtain, from each third network device through a physical link between the first network device and the corresponding third network device, a tunnel entry corresponding to a tunnel between the corresponding third network device and the network device in the second site, and store the obtained tunnel entry.

Optionally, when the first network device is relatively far away from the plurality of third network devices or cannot be connected to the third network devices through physical links, the first network device and the third network device may be connected through a network tunnel. The network tunnel may include a generic routing encapsulation (Generic Routing Encapsulation, GRE) tunnel. Certainly, the network tunnel may alternatively be another tunnel.

In addition, the physical link or the network tunnel between the first network device and the third network device is mainly used to synchronize tunnel entries in the site and transmit data packets in the site, and does not need to be advertised to a network outside the site. Therefore, network addresses on ports that are on network devices in the first site and used to establish physical links may all be set to private network addresses, and even different sites may use a same address space. This can reduce consumption of network address resources of an operator by an SD-WAN network.

Case 2: The second network device is deployed in a third site, a fourth network device is deployed in the second site, the first network device and the fourth network device access a first transport network, and the second network device and the fourth network device access a second transport network and establish a tunnel.

In this case, the second network device is located in the third site, the site identifier obtained by the first network device is used to identify the second site, and the network address of the second network device matches the site prefix obtained by the first network device. Therefore, it may be determined that the site prefix obtained by the first network device is a site prefix of the third site, and the site identifier obtained by the first network device is a site identifier of the second site.

It should be noted that, after being powered on, the second network device may register with a control device, to obtain configuration information of the second network device from the control device. The configuration information may include a site identifier and the site prefix of the second site, TNP information of the second network device, and the like. Then, the second network device may send the site prefix and the site identifier of the second site to the control device. After receiving the site prefix and the site identifier of the second site that are sent by the second network device, the control device may determine, based on a network topology structure, that network devices that access a same transport network as the second network device include the fourth network device, a tunnel is established between the second network device and the fourth network device, and the fourth network device and the first network device access the same transport network, but the first network device and the second network device do not access a same transport network. That is, the second network device may communicate with the fourth network device, and the fourth network device may communicate with the first network device. However, the first network device cannot directly communicate with the second network device. Therefore, the control device may send the site identifier of the second site and the site prefix of the third site to the first network device.

Optionally, after the first network device adds the first routing entry to the routing table of the first network device, the first network device obtains TNP information of the fourth network device, where the TNP information of the fourth network device corresponds to the first transport network. The first network device establishes a tunnel between the first network device and the fourth network device based on the TNP information of the fourth network device. The first network device stores a tunnel identifier of each established tunnel and corresponding tunnel attribute information as a tunnel entry.

In this application, when sending the site identifier of the second site and the site prefix of the third site to the first network device, the control device further sends the TNP information of the fourth network device. In this way, when receiving the site identifier of the second site and the site prefix of the third site that are sent by the control device, the first network device may further receive the TNP information of the fourth network device. The TNP information corresponds to the first transport network.

Case 3: The second network device is deployed in a third site, a fourth network device is deployed in the second site, the first network device, the second network device, and the fourth network device all access a first transport network, and the second network device and the fourth network device access a second transport network and establish a tunnel.

In this case, the second network device is located in the third site, the site identifier obtained by the first network device is used to identify the second site, and the network address of the second network device matches the site prefix obtained by the first network device. Therefore, it may be determined that the site prefix obtained by the first network device is a site prefix of the third site, and the site identifier obtained by the first network device is a site identifier of the second site.

It should be noted that, after being powered on, the second network device may register with a control device, to obtain configuration information of the second network device from the control device. The configuration information may include a site identifier and the site prefix of the second site, TNP information of the second network device, and the like. Then, the second network device may send the site prefix and the site identifier of the second site to the control device. After receiving the site prefix and the site identifier of the second site that are sent by the second network device, the control device may determine, based on a network topology structure, that network devices that access a same transport network as the second network device include the first network device and the fourth network device, a tunnel is established between the second network device and the fourth network device, and the fourth network device and the first network device access the same transport network. That is, the first network device may communicate with the second network device, the first network device may also communicate with the fourth network device, and the fourth network device may communicate with the second network device. Therefore, the control device may send the site identifier of the second site and the site prefix of the third site to the first network device.

Optionally, after the first network device adds the first routing entry to the routing table of the first network device, the first network device obtains a site identifier of the third site. The first network device adds a second routing entry to the routing table of the first network device, where the second routing entry includes the site identifier of the third site and the site prefix, and the second routing entry is used to send a data packet to the second network device.

In this application, the first network device may communicate with the second network device. Therefore, in consideration of high reliability, in addition to the site identifier of the second site and the site prefix of the third site, the first network device may further obtain the site identifier of the third site.

It should be noted that while sending the site identifier of the second site and the site prefix of the third site to the first network device, the control device may send the site identifier of the third site to the first network device. Certainly, the control device may alternatively first send the site identifier of the second site and the site prefix of the third site to the first network device, and then send the site identifier of the third site to the first network device.

Optionally, after the first network device adds the second routing entry to the routing table of the first network device, the first network device obtains TNP information of the second network device and TNP information of the fourth network device. The first network device establishes a tunnel between the first network device and the second network device and a tunnel between the first network device and the fourth network device based on the TNP information of the second network device and the TNP information of the fourth network device. The first network device stores a tunnel identifier of each established tunnel and corresponding tunnel attribute information as a tunnel entry.

In this application, when sending the site identifier of the second site and the site prefix of the third site to the first network device, the control device further sends the TNP information of the fourth network device. In this way, when receiving the site identifier of the second site and the site prefix of the third site that are sent by the control device, the first network device may further receive the TNP information of the fourth network device. The TNP information corresponds to the first transport network. Similarly, when sending the site identifier of the third site to the first network device, the control device further sends the TNP information of the second network device. In this way, when receiving the site identifier of the third site sent by the control device, the first network device may further receive the TNP information of the second network device.

After receiving the TNP information of the second network device and the TNP information of the fourth network device, the first network device may directly establish the tunnel between the first network device and the second network device based on the TNP information of the second network device, and establish the tunnel between the first network device and the fourth network device based on the TNP information of the fourth network device.

Optionally, the first network device may obtain a priority of the second site and a priority of the third site. If the priority of the third site is higher than the priority of the second site, the first network device may establish the tunnel between the first network device and the second network device based on the TNP information of the second network device. Then, the first network device detects connectivity of the tunnel between the first network device and the second network device. If the detection fails, the first network device may establish the tunnel between the first network device and the fourth network device based on the TNP of the fourth network device. If the detection succeeds, the first network device may temporarily skip establishing the tunnel between the first network device and the fourth network device, and establish the tunnel between the first network device and the fourth network device until the tunnel between the first network device and the second network device is faulty and cannot be connected.

It should be noted that the control device may send the priority of the second site and the priority of the third site to the first network device while sending the site identifier and the site prefix. Certainly, the control device may alternatively first send the site identifier and the site prefix, and then send the priority of the second site and the priority of the third site.

In this application, to transmit a data packet between the first network device and the second network device, a routing entry is generated and a tunnel is established. Therefore, the control device usually sets the priority of the third site to be higher. That is, the priority of the third site is higher than the priority of the second site. In this way, the first network device preferentially establishes the tunnel between the first network device and the second network device. Then, a data packet transmitted between the first network device and the second network device is preferentially transmitted through the tunnel directly connected between the two devices, and does not need to be forwarded by the fourth network device, to reduce network overheads and improve packet transmission efficiency.

Optionally, in the foregoing three cases, after the tunnel between the first network device and the second network device is established according to the foregoing steps, some tunnels may be connectable, and some tunnels may not be connectable. Therefore, in this application, when the first network device stores the tunnel identifier of each established tunnel and the corresponding tunnel attribute information as a tunnel entry, the first network device detects connectivity of each established tunnel. The first network device stores a tunnel identifier of each tunnel on which connectivity detection succeeds, corresponding tunnel attribute information, and a connection identifier set to valid as a tunnel entry; and/or the first network device stores a tunnel identifier of each tunnel on which connectivity detection fails, corresponding tunnel attribute information, and a connection identifier set to invalid as a tunnel entry.

Implementations of detecting connectivity of established tunnels by the first network device are the same. Therefore, one tunnel is used as an example. After establishing the tunnel, the first network device may send a detection message to the second network device through the tunnel. The detection message is used to detect whether the tunnel is currently available. If a response message returned by the second network device for the detection message is received, it may be determined that the tunnel is available. That is, the tunnel can be connected. If no response message returned by the second network device for the detection message is received, it may be determined that the tunnel is unavailable. That is, the tunnel cannot be connected.

It should be noted that the detection information may not only detect whether the tunnel is currently available, but also may detect information such as a bandwidth and a delay of the tunnel. In addition, the first network device may periodically send a detection signal to perform detection. This is not limited in this application.

According to a third aspect, a packet sending apparatus is provided. The packet sending apparatus has a function of implementing behavior in the packet sending method in the first aspect. The packet sending apparatus includes at least one module, and the at least one module is configured to implement the packet sending method provided in the first aspect.

According to a fourth aspect, a routing entry generation apparatus is provided. The routing entry generation apparatus has a function of implementing behavior in the routing entry generation method in the second aspect. The routing entry generation apparatus includes at least one module, and the at least one module is configured to implement the routing entry generation method provided in the second aspect.

According to a fifth aspect, a network device is provided. The network device includes a processor and a memory, and the memory is configured to store a program used to perform the packet sending method provided in the first aspect or a program used to perform the routing entry generation method provided in the second aspect, and store data used to implement the packet sending method provided in the first aspect or the routing entry generation method provided in the second aspect. The processor is configured to execute the program stored in the memory. An operation apparatus of the storage device may further include a communications bus, and the communications bus is configured to establish a connection between the processor and the memory.

According to a sixth aspect, a computer-readable storage medium is provided. The computer-readable storage medium stores instructions, and when the instructions are run on a computer, the computer is enabled to perform the packet sending method provided in the first aspect or the routing entry generation method provided in the second aspect.

According to a seventh aspect, a computer program product including instructions is provided. When the instructions are run on a computer, the computer is enabled to perform the packet sending method provided in the first aspect or the routing entry generation method provided in the second aspect.

Technical effects achieved in the third aspect, the fourth aspect, the fifth aspect, the sixth aspect, and the seventh aspect are similar to technical effects obtained by corresponding technical means in the first aspect or the second aspect. Details are not described herein again.

The technical solutions provided in this application may bring at least the following beneficial effects:

In this application, each routing entry in the routing table stored in the first network device in the first site includes a site prefix and a corresponding site identifier. Therefore, when receiving the first data packet, the first network device may determine the target routing entry from the routing table. Because the site identifier in the target routing entry is used to identify the second site, the first network device may directly send the first data packet to the second site based on the site identifier in the target routing entry. That is, the first network device may directly send, to the second site based on the site identifier of the second site, a data packet sent from the first site to the second site, without determining a port that is of a network device in the second site and that the data packet is specifically sent to. In addition, the first network device may store only one routing entry for one site. This avoids a large quantity of duplicate routing entries, and can also avoid updating of a routing table caused by a change of a status of a network device.

### BRIEF DESCRIPTION OF DRAWINGS

FIG. 1 is a diagram of a system architecture in a packet sending method according to an embodiment of this application;
FIG. 2 is a flowchart of a packet sending method according to an embodiment of this application;
FIG. 3 is a schematic diagram of a tunnel index field according to an embodiment of this application;
FIG. 4 is a diagram of a system architecture in a routing entry generation method according to an embodiment of this application;
FIG. 5 is a diagram of another system architecture in a routing entry generation method according to an embodiment of this application;
FIG. 6 is a flowchart of a routing entry generation method according to an embodiment of this application;
FIG. 7 is a diagram of still another system architecture in a routing entry generation method according to an embodiment of this application;
FIG. 8 is a flowchart of another routing entry generation method according to an embodiment of this application;
FIG. 9 is a diagram of yet another system architecture in a routing entry generation method according to an embodiment of this application;
FIG. 10 is a flowchart of still another routing entry generation method according to an embodiment of this application;
FIG. 11 is a schematic diagram of a structure of a packet sending apparatus according to an embodiment of this application;
FIG. 12 is a schematic diagram of a structure of a routing entry generation apparatus according to an embodiment of this application; and
FIG. 13 is a schematic diagram of a structure of a network device according to an embodiment of this application.

### DESCRIPTION OF EMBODIMENTS

To make objectives, technical solutions, and advantages of this application clearer, the following further describes implementations of this application in detail with reference to the accompanying drawings.

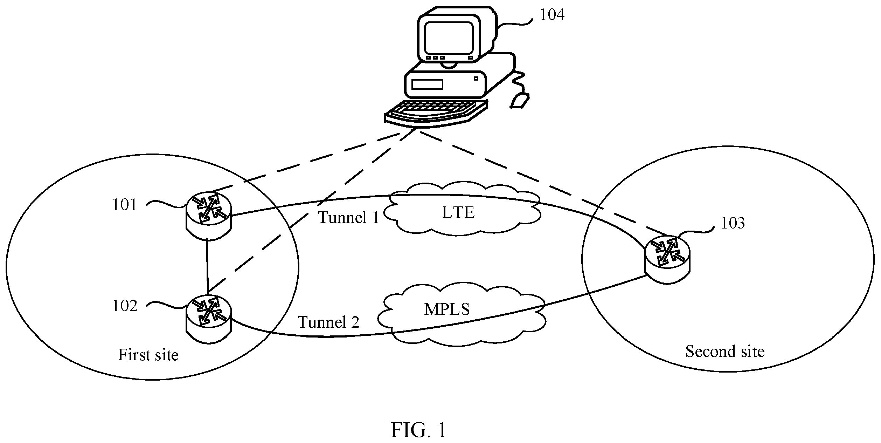

FIG. 1 is a diagram of a system architecture in a packet sending method according to an embodiment of this application. As shown in FIG. 1, the system includes a network device 101, a network device 102, a network device 103, and a control device 104. The network device 101 and the network device 102 are network devices deployed in a first site, and the network device 103 is a network device deployed in a second site. The network device 101, the network device 102, and the network device 103 may be connected to the control device 104 in a wireless or wired manner to perform communication.

After being powered on, the network devices in the first site and the network device in the second site may register with the control device 104. Then, a tunnel may be established, through the control device 104, between two network devices that belong to different sites. A physical link may further be established between every two network devices in a same site. For example, as shown in FIG. 1, a tunnel 1 is established between the network device 101 and the network device 103 through a Long Term Evolution (Long Term Evolution, LTE) network. A tunnel 2 is established between the network device 102 and the network device 103 through a multi-protocol label switching (Multi-Protocol Label Switching, MPLS) network. A physical link is established between the network device 101 and the network device 102.

In addition, the network device 101 and the network device 102 may further receive a site prefix and a site identifier of the second site that are sent by the control device 104, and add the site prefix and the site identifier of the second site to a stored routing table as a routing entry. To be specific, the network device 101 may add, as a routing entry, the site prefix and the site identifier of the second site to the routing table stored in the network device 101, or the network device 102 may add, as a routing entry, the site prefix and the site identifier of the second site to a routing table stored in the network device 102. Similarly, the network device 103 may further receive a site prefix and a site identifier of the first site that are sent by the control device 104, and add, as a routing entry, the site prefix and the site identifier of the first site to a routing table stored in the network device 103.

In addition, after a network device in the first site establishes a tunnel with a network device in the second site through the control device 104, the network devices may further store a tunnel entry corresponding to each established tunnel. That is, the network device 101, the network device 102, and the network device 103 may store tunnel entries corresponding to the tunnel 1 and the tunnel 2, and the tunnel entry includes a tunnel identifier and tunnel attribute information.

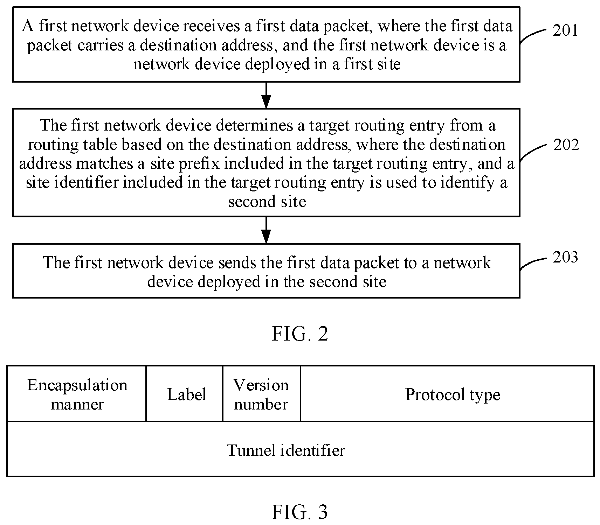

After a network device in the first site and a network device in the second site establish a tunnel and store a routing entry and a tunnel entry according to the foregoing method, the network device in the first site and the network device in the second site may transmit a data packet through the established tunnel based on the stored routing table and tunnel entry. For details, refer to the embodiment shown in FIG. 2. Details are not described herein.

It should be noted that, in the system architecture shown in FIG. 1, a network device in the first site and a network device in the second site may establish a tunnel through the control device 104, and obtain a site prefix and a site identifier of a peer site. However, in some other embodiments, the system may not include the control device 104. In this case, a network device in the first site may broadcast the site prefix and the site identifier of the first site. In this way, a network device in the second site may receive the site prefix and the site identifier of the first site, and therefore, store the site prefix and the site identifier of the first site as a routing entry. Similarly, a network device in the second site may broadcast the site prefix and the site identifier of the second site. In this way, a network device in the first site may receive the site prefix and the site identifier of the second site, and therefore, store the site prefix and the site identifier of the second site as a routing entry. Then, the network device in the first site and the network device in the second site may establish a tunnel. Certainly, this may alternatively be implemented by another method. This is not limited in embodiments of this application.

It should be noted that for a same tunnel, source port information and peer port information in tunnel attribute information stored in network devices at two ends of a tunnel are opposite. For example, for the tunnel 1, source port information in tunnel attribute information stored in the network device 101 and the network device 102 is destination port information in tunnel attribute information stored in the network device 103, and destination port information in the tunnel attribute information stored in the network device 101 and the network device 102 is source port information in the tunnel attribute information stored in the network device 103. Source port information of a tunnel may include a source network address of the tunnel, and destination port information of the tunnel may include a destination network address of the tunnel.

Optionally, in the system shown in FIG. 1, an example in which two network devices are deployed in the first site and one network device is deployed in the second site is used for description. Certainly, in another possible case, one network device or more than two network devices may alternatively be deployed in the first site, and two or more network devices may alternatively be deployed in the second site. In addition, a quantity of network devices deployed in the first site may be the same as or different from a quantity of network devices deployed in the second site.

FIG. 2 is a flowchart of a packet sending method according to an embodiment of this application. The method is performed by a first network device. The first network device may be any network device in a first site. For example, the first network device may be the network device 101 or the network device 102 shown in FIG. 1. In this embodiment of this application, the first network device stores a routing table, the routing table includes a plurality of routing entries, and each of the plurality of routing entries includes a site prefix and a corresponding site identifier. Refer to FIG. 2. The method includes the following steps.

Step 201: The first network device receives a first data packet, where the first data packet carries a destination address, and the first network device is a network device deployed in the first site.

In this embodiment of this application, the first data packet may be a data packet sent by a user terminal in the first site to the first network device, or may be a data packet sent by a network device in another site to the first network device.

When the first data packet is a data packet sent by the user terminal in the first site to the first network device, because the first site includes a plurality of network devices, before sending the first data packet, the user terminal in the first site needs to select a network device from the plurality of network devices in the first site as the first network device, and then sends the first data packet to the first network device.

In an example, the user terminal in the first site may select a network device from the plurality of network devices in the first site as the first network device based on a networking manner of the first site.

It should be noted that a user terminal may store a correspondence between a networking manner and a device identifier. When the user terminal needs to send a data packet, the user terminal may determine a network device based on a networking manner of a site in which the user terminal is located and the correspondence between a networking manner and a device identifier, to send the data packet. For example, the user terminal in the first site may obtain a corresponding device identifier from a stored correspondence between a networking manner and a device identifier based on the networking manner of the first site, and further determine, as the first network device, a network device identified by the device identifier.

Step 202: The first network device determines a target routing entry from the stored routing table based on the destination address carried in the first data packet where the destination address carried in the first data packet matches a site prefix included in the target routing entry, and a site identifier included in the target routing entry is used to identify a second site.

Because a site prefix indicates a network segment corresponding to a site, the destination address carried in the first data packet may be matched with the site prefix included in each routing entry in the routing table, to determine the target routing entry from the routing table.

It should be noted that the destination address carried in the first data packet matches the site prefix included in the target routing entry, and the site identifier included in the target routing entry is used to identify the second site. Therefore, it may be determined that the destination address carried in the first data packet is an address of a user terminal in the second site, and then it may be determined that the site prefix included in the target routing entry is the site prefix of the second site, and the site identifier included in the target routing entry is an identifier of the second site.

Step 203: The first network device sends the first data packet to a network device deployed in the second site.

In this embodiment of this application, the first network device may send, according to the following steps (1) to (3), the first data packet to the network device deployed in the second site.
(1) The first network device determines one or more tunnel entries based on the site identifier included in the target routing entry, where the one or more tunnel entries are tunnel entries corresponding to tunnels established between the first site and the second site.

In some embodiments, the first network device stores one tunnel table, each tunnel entry in the tunnel table includes a tunnel identifier and corresponding tunnel attribute information, the tunnel table stores tunnel entries corresponding to a plurality of sites, the plurality of sites are sites that establish tunnels with the first site, and the plurality of sites include the second site. In this way, the first network device may determine the one or more tunnel identifiers based on the site identifier included in the target routing entry. The one or more tunnel identifiers are identifiers of the tunnels established between the first site and the second site. Then, the first network device may determine the one or more tunnel entries from the tunnel table based on the one or more tunnel identifiers.

It should be noted that the tunnel attribute information included in each tunnel entry may include a tunnel encapsulation manner, a source address and a destination address of a tunnel, a bandwidth of the tunnel, a delay of the tunnel, and the like. In addition, in some embodiments, the first network device may store a first mapping relationship between a site identifier and a tunnel identifier. To be specific, the first mapping relationship stores an identifier of each site that establishes a tunnel with the first site, and an identifier of the tunnel established between each site and the first site. In this way, the first network device may determine the one or more tunnel identifiers from the first mapping relationship based on the site identifier included in the target routing entry. Then, the first network device may determine, from the tunnel table, tunnel entries that include tunnel identifiers the same as the one or more tunnel identifiers, to obtain the one or more tunnel entries.

In some other embodiments, the first network device stores a plurality of tunnel tables, the plurality of tunnel tables one-to-one correspond to a plurality of sites, the plurality of sites are sites that establish tunnels with the first site, and the plurality of sites include the second site. In this way, the first network device may determine an identifier of a target tunnel table based on the site identifier included in the target routing entry. The target tunnel table is a tunnel table corresponding to the second site in the plurality of tunnel tables. Then, the first network device may determine the target tunnel table from the plurality of tunnel tables based on the identifier of the target tunnel table, and determine tunnel entries stored in the target tunnel table as the one or more tunnel entries.

The first network device stores different tunnel tables for different sites, and the first network device may store a second mapping relationship between a site identifier and a tunnel table identifier. To be specific, the second mapping relationship stores an identifier of each site that establishes a tunnel with the first site, and an identifier of a tunnel table corresponding to each site. In this way, the first network device may determine the identifier of the target tunnel table from the second mapping relationship based on the site identifier included in the target routing entry. Then, the target tunnel table may be determined from the plurality of tunnel tables based on the identifier of the target tunnel table, and the tunnel entries in the target tunnel table are further determined as the one or more tunnel entries.

(2) The first network device selects a tunnel entry from the one or more tunnel entries as a target tunnel entry.

In some embodiments, the first network device may select a tunnel entry from the one or more tunnel entries as the target tunnel entry according to a tunnel selection policy.

For example, a tunnel selection policy stored in the first network device is selecting a tunnel with a maximum bandwidth. In this way, the first network device may obtain tunnel attribute information included in the one or more tunnel entries, and obtain bandwidths of tunnels from the tunnel attribute information. Then, the first network device may select a tunnel entry with a largest bandwidth from the one or more tunnel entries as the target tunnel entry based on the bandwidths of the tunnels.

For example, a tunnel selection policy stored in the first network device is selecting a tunnel with a bandwidth greater than 1 M. In this way, the first network device may obtain tunnel attribute information included in the one or more tunnel entries, and obtain bandwidths of tunnels from the tunnel attribute information. However, bandwidths of the one or more tunnels are less than 1 M. In this case, the first network device may discard the first data packet.

It should be noted that when there is no tunnel entry that meets the tunnel selection policy in the one or more tunnel entries, that is, when the first network device cannot select a target tunnel entry from the one or more tunnel entries according to the tunnel selection policy, the first network device may discard the first data packet. Alternatively, the first network device may select a tunnel entry from the one or more tunnel entries as the target tunnel entry according to a hash algorithm.

For example, when a tunnel identifier is represented by a number, the first network device may perform an operation on tuple information carried in the first data packet to obtain a number, determine a quantity of tunnels between the first site and the second site, and further perform a remainder operation on the number obtained by the operation and the quantity of tunnels. The first network device uses an obtained remainder as a tunnel identifier, and then may use a tunnel entry including the tunnel identifier as the target tunnel entry. It is assumed that the destination address carried in the first data packet is 10.1.1.1, and numbers in the destination addresses may be added to obtain a number 10 + 1 + 1 + 1 = 13. In addition, the quantity of tunnels between the first site and the second site is 10. Therefore, a remainder 3 may be obtained through calculation based on the number 13 and the quantity 10 of tunnels. In this way, a tunnel entry including a tunnel identifier 3 may be used as the target tunnel entry.

Optionally, each of the one or more tunnel entries further includes a connection identifier, and the connection identifier is used to indicate whether a corresponding tunnel is connected. In this case, after the first network device determines the one or more tunnel entries, the first network device may select, from the one or more tunnel entries, tunnel entries with connection identifiers set to valid, and then, the first network device may select a tunnel entry from the selected tunnel entries as the target tunnel entry. A method for selecting the target tunnel is the same as the method described above, and details are not described herein again.

(3) The first network device sends the first data packet through a tunnel corresponding to the target tunnel entry.

After selecting the target tunnel entry, the first network device may obtain a tunnel identifier included in the target tunnel entry, use a tunnel identified by the tunnel identifier as a target tunnel, and send the first data packet through the target tunnel.

It should be noted that, because the tunnel table includes all tunnels established between network devices in the first site and the network device in the second site, the target tunnel determined by the first network device may be a tunnel established between the first network device and the network device in the second site or a tunnel established between a second network device and the network device in the second site. The second network device is a network device other than the first network device in the first site.

In some embodiments, if the target tunnel is a tunnel established between the first network device and the network device in the second site, the first network device may directly obtain tunnel attribute information of the target tunnel from a target tunnel entry stored in the first network device, further perform tunnel encapsulation on the first data packet based on the obtained tunnel attribute information to obtain a second data packet, and send the second data packet through the target tunnel.

In other embodiments, if the target tunnel is a tunnel established between the second network device and the network device in the second site, the first network device may add a tunnel identifier of the target tunnel to the first data packet to obtain a third data packet, and send the third data packet to the second network device through a physical link between the first network device and the second network device. After the second network device receives the third data packet, the second network device may parse the tunnel identifier of the target tunnel and the first data packet from the third data packet. Then, the second network device may obtain, based on the tunnel identifier of the target tunnel, tunnel attribute information of the target tunnel from a target tunnel entry stored in the second network device, further perform tunnel encapsulation on the first data packet based on the obtained tunnel attribute information to obtain a second data packet, and send the second data packet through the target tunnel.

In a possible implementation, the first network device may add a tunnel index field to the first data packet, to obtain the third data packet. The tunnel index field may include the tunnel identifier of the target tunnel. Then, the first network device may send the third data packet to the second network device through the physical link between the first network device and the second network device.

For example, as shown in FIG. 3, the tunnel index field may include a tunnel identifier, and the tunnel identifier may be the tunnel identifier of the target tunnel. Optionally, the tunnel index field may further include an encapsulation manner, a label, a version number, a protocol type, and the like. The encapsulation manner is a tunnel type corresponding to the tunnel identifier. The label is a flag bit, and may be used to indicate that a data packet is sent from a user side to a tunnel side or received from the tunnel side. The version number is a version number of the used tunnel index field. The protocol type is a protocol type of the first data packet.

It should be noted that because the tunnel index field includes not only the tunnel identifier of the target tunnel, but also the encapsulation manner, the label, the version number, the protocol type, and the like of the tunnel index field, the second network device may parse out the first data packet from the third data packet based on information such as the encapsulation manner, the label, the version number, and the protocol type, and may further obtain the tunnel identifier of the target tunnel.

After the second network device parses out the first data packet, because the second network device also stores the target tunnel entry, the second network device may obtain the tunnel attribute information of the target tunnel from the target tunnel entry based on the tunnel identifier of the target tunnel, further perform tunnel encapsulation on the first data packet based on the obtained tunnel attribute information to obtain the second data packet, and send the second data packet through the target tunnel.

It should be noted that, after receiving the second data packet, the network device in the second site may perform tunnel decapsulation on the second data packet, to obtain the first data packet.

It should be noted that steps 201 to 203 describe a case in which the network device in the first site sends a data packet to the network device in the second site. It should be understood that the network device in the second site may also send a data packet to a network device in the first site, and for an implementation process in which the network device in the second site sends a data packet to the network device in the first site, refer to steps 201 to 203. Details are not described herein again.

In this embodiment of this application, each routing entry in the routing table stored in the first network device in the first site includes a site prefix and a corresponding site identifier. Therefore, when receiving the first data packet, the first network device may determine the target routing entry from the routing table. Because the site identifier in the target routing entry is used to identify the second site, the first network device may directly send the first data packet to the second site based on the site identifier in the target routing entry. That is, the first network device may directly send, to the second site based on the site identifier of the second site, a data packet sent from the first site to the second site, without determining a port that is of a network device in the second site and that the data packet is specifically sent to. In addition, the first network device may store only one routing entry for one site. This avoids a large quantity of duplicate routing entries, and can also avoid updating of a routing table caused by a change of a status of a network device. In addition, when sending a data packet to the second site, the first network device may also send the data packet through a tunnel established between another network device in the first site and the second site, so that more tunnels do not need to be established, resources are saved, and tunnel utilization is improved.

In the foregoing embodiment, the network device in the first site may transmit the data packet to the network device in the second site based on a stored routing table. Therefore, before the network devices in the two sites transmit the data packet, the network devices need to generate and store a routing entry. In different system architectures, the network device generates routing entries in different manners, which are described in a plurality of embodiments in the following.

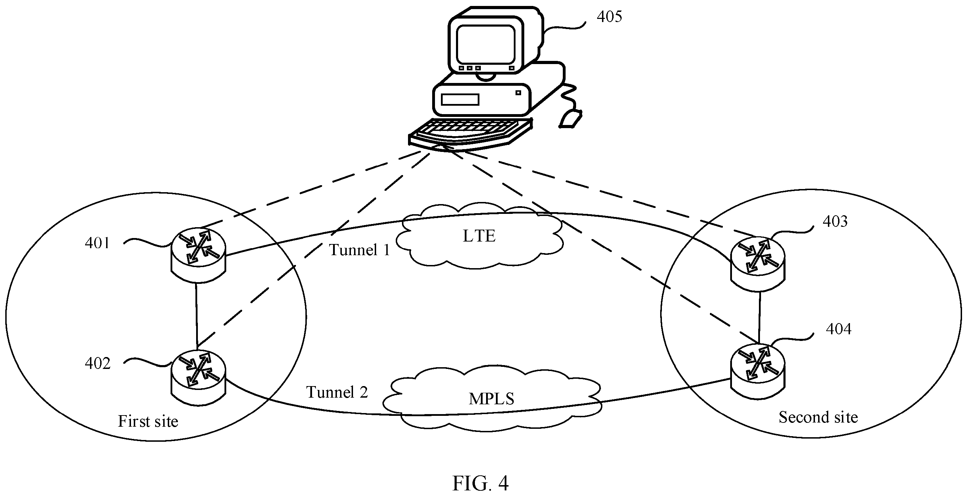

FIG. 4 is a diagram of a system architecture in a routing entry generation method according to an embodiment of this application. As shown in FIG. 4, the system includes a network device 401, a network device 402, a network device 403, a network device 404, and a control device 405. The network device 401 and the network device 402 are network devices deployed in a first site, and the network device 403 and the network device 404 are network devices deployed in a second site. The network device 401, the network device 402, the network device 403, and the network device 404 may be connected to the control device 405 in a wireless or wired manner to perform communication.

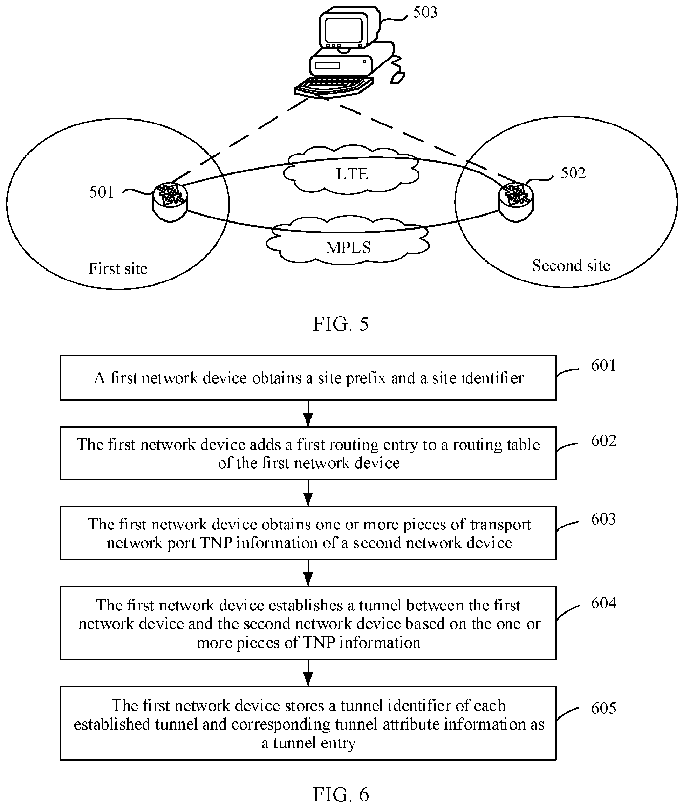

A physical link is established between the network device 401 and the network device 402, and a physical link is established between the network device 403 and the network device 404. The network device 401 and the network device 403 access a same transport network, that is, an LTE network. The network device 402 and the network device 404 access a same transport network, that is, an MPLS network. In this way, a tunnel 1 may be established between the network device 401 and the network device 403 through the LTE network, a tunnel 2 may be established between the network device 402 and the network device 404 through the MPLS network, and the network devices may generate routing entries. For a specific implementation, refer to related descriptions in the following embodiment in FIG. 5. Details are not described herein.

It should be noted that, with reference to related descriptions in FIG. 1, the system architecture shown in FIG. 4 may alternatively not include the control device 405. This is not limited in this embodiment of this application.

Optionally, in the system shown in FIG. 4. an example in which two network devices are deployed in the first site and two network devices are deployed in the second site is used for description. Certainly, in another possible case, one network device or more than two network devices may alternatively be deployed in the first site, and one network device or more than two network device s may alternatively be deployed in the second site. In addition, a quantity of network devices deployed in the first site may be the same as or different from a quantity of network devices deployed in the second site.

For example, refer to FIG. 5. A network device 501 is deployed in a first site, and a network device 502 is deployed in a second site. The network device 501 and the network device 502 may be connected to a control device 503 in a wireless or wired manner to perform communication. The network device 501 and the network device 502 may access a plurality of same transport networks. That is, both the network device 501 and the network device 502 access an LTE network and an MPLS network, and the two network devices may establish a plurality of tunnels through the plurality of transport networks.

Based on the system architectures in FIG. 4 and FIG. 5, embodiments of this application provide a routing entry generation method. The method is performed by a first network device. In this embodiment of this application, the first network device is deployed in the first site, a second network device is deployed in the second site, and the first network device and the second network device access one or more same transport networks. For example, the first network device may be the network device 401 or the network device 402 shown in FIG. 4 or the network device 501 shown in FIG. 5, and the second network device may be the network device 403 or the network device 404 shown in FIG. 4 or the network device 502 shown in FIG. 5. Refer to FIG. 6. The method includes the following steps.

Based on the foregoing description, a network device in the first site and a network device in the second site may establish a tunnel and obtain a site prefix and the site identifier of a peer site through the control device. Alternatively, the control device is not used. Regardless of whether the control device is used or not, a method for generating a routing entry by the first network device is similar. Therefore, the following describes a routing entry generation method by using an example in which the control device is used.

Step 601: The first network device obtains a site prefix and a site identifier, where the site identifier is used to identify the second site, and a network address of the second network device matches the site prefix.

The second network device is located in the second site, the site identifier obtained by the first network device is used to identify the second site, and the network address of the second network device matches the site prefix obtained by the first network device. Therefore, it may be determined that the site prefix and the site identifier that are obtained by the first network device are a site prefix and a site identifier of the second site.

It should be noted that, after being powered on, the second network device may register with the control device, to obtain configuration information of the second network device from the control device. The configuration information may include the site identifier and the site prefix of the second site, TNP information of the second network device, and the like. Then, the second network device may send the site prefix and the site identifier of the second site to the control device. After receiving the site prefix and the site identifier of the second site that are sent by the second network device, the control device may determine, based on a network topology structure, that network devices that access a same transport network as the second network device include the first network device. That is, the second network device can communicate with the first network device. Therefore, the control device may send the site prefix and the site identifier of the second site to the first network device.

Step 602: The first network device adds a first routing entry to a routing table of the first network device, where the first routing entry includes the site prefix and the site identifier, and the first routing entry is used to send a data packet to the second network device.

After generating and storing the routing entry in steps 601 and 602, the first network device may further generate and store a tunnel entry in steps 603 to 605.

Step 603: The first network device obtains one or more pieces of TNP information of the second network device, where the one or more pieces of TNP information one-to-one correspond to the one or more transport networks.

In this embodiment of this application, when sending the site prefix and the site identifier of the second site to the control device, the second network device further sends the TNP information of the second network device. In this way, when receiving the site prefix and the site identifier of the second site that are sent by the control device, the first network device may further receive the one or more pieces of TNP information of the second network device. The one or more pieces of TNP information one-to-one correspond to the one or more transport networks. That is, the one or more pieces of TNP information are TNP information corresponding to the one or more same transport networks accessed by the first network device and the second network device.

The TNP information is used to indicate an externally accessible physical port or logical port and a parameter required in a communications process. For example, the TNP information may include a network operator identifier, an encryption mode, whether there is network address translation, and a routing domain of a corresponding transport network.

Step 604: The first network device establishes a tunnel between the first network device and the second network device based on the one or more pieces of TNP information of the second network device.

After receiving the one or more pieces of TNP information of the second network device, the first network device may match TNP information of the first network device with the one or more pieces of TNP information. If one piece of TNP information of the first network device can successfully match one piece of TNP information of the second network device, the first network device and the second network device may establish a tunnel between the first network device and the second network device by using the successfully-matched pair of TNP information.

In this embodiment of this application, whether the TNP information of the first network device can successfully match the TNP information of the second network device is determined by using a matching condition. That is, when one piece of TNP information of the first network device and one piece of TNP information of the second network device meet the matching condition, it may be determined that the TNP information of the first network device can successfully match the TNP information of the second network device.

The matching condition may be set according to an actual situation. In an example, the matching condition may mean that some data included in the two pieces of TNP information is the same. For example, network operator identifiers included in the two pieces of TNP information are the same, or routing domains of transport networks corresponding to the two pieces of TNP information are the same. In another example, the matching condition may mean that all information included in the two pieces of TNP information is the same.

It should be noted that when there are a plurality of successfully-matched pairs of TNP information in the TNP information of the first network device and the TNP information of the second network device, a plurality of tunnels may be established between the first network device and the second network device.

Step 605: The first network device stores a tunnel identifier of each tunnel established between the first network device and the second network device and corresponding tunnel attribute information as a tunnel entry.

In some embodiments, after the tunnel between the first network device and the second network device is established according to the foregoing steps, the first network device may directly store the tunnel identifier of each established tunnel and the corresponding tunnel attribute information as a tunnel entry.

In some other embodiments, after the tunnel between the first network device and the second network device is established according to the foregoing steps, some tunnels may be connectable, and some tunnels may not be connectable. Therefore, in this embodiment of this application, after the tunnel between the first network device and the second network device is established, the first network device may detect connectivity of each established tunnel. Then, the first network device may store a tunnel identifier of each tunnel on which connectivity detection succeeds, corresponding tunnel attribute information, and a connection identifier set to valid as a tunnel entry; and/or the first network device may store a tunnel identifier of each tunnel on which connectivity detection fails, corresponding tunnel attribute information, and a connection identifier set to invalid as a tunnel entry.

Implementations of detecting connectivity of established tunnels by the first network device are the same. Therefore, one tunnel is used as an example. After establishing the tunnel, the first network device may send a detection message to the second network device through the tunnel. The detection message is used to detect whether the tunnel is currently available. If a response message returned by the second network device for the detection message is received, it may be determined that the tunnel is available. That is, the tunnel can be connected. If no response message returned by the second network device for the detection message is received, it may be determined that the tunnel is unavailable. That is, the tunnel cannot be connected.

It should be noted that the detection information may not only detect whether the tunnel is currently available, but also may detect information such as a bandwidth and a delay of the tunnel. In addition, the first network device may periodically send a detection signal to perform detection. This is not limited in this embodiment of this application.

It can be learned from the foregoing that the first network device may store one tunnel table, or may store a plurality of tunnel tables. When the first network device stores one tunnel table, after a tunnel is established between the first network device and the second network device, the first network device may add a tunnel identifier of each tunnel and corresponding tunnel attribute information to the tunnel table as a tunnel entry, and store a first mapping relationship between the site identifier of the second site and a tunnel identifier. When the first network device stores a plurality of tunnel tables, the first network device may search, based on the site identifier of the second site, a second mapping relationship between a site identifier and a tunnel table identifier for an identifier of a tunnel table corresponding to the second site. If the tunnel table identifier corresponding to the second site is found, the first network device may add a tunnel identifier of each currently established tunnel and corresponding tunnel attribute information to the tunnel table corresponding to the second site as a tunnel entry. If the tunnel table identifier corresponding to the second site is not found, the first network device may establish a tunnel table, add a tunnel identifier of each currently established tunnel and corresponding tunnel attribute information to the established tunnel table as a tunnel entry, and store a second mapping relationship between the site identifier of the second site and a tunnel table identifier of the tunnel table.

Optionally, one or more third network devices are further deployed in the first site, each of the one or more third network devices establishes a tunnel with a network device in the second site, and each of the one or more third network devices further establishes a physical link with the first network device. In this way, the first network device may further obtain, from each third network device through a physical link between the first network device and the corresponding third network device, a tunnel entry corresponding to a tunnel between the corresponding third network device and the network device in the second site, and store the obtained tunnel entry.

It should be noted that a method in which the first network device stores the tunnel entry obtained from the third network device may be the same as the foregoing method, and details are not described herein again.

Optionally, when the first network device is relatively far away from the plurality of third network devices or cannot be connected to the third network devices through physical links, the first network device and the third network device may be connected through a network tunnel. The network tunnel may include a generic routing encapsulation (Generic Routing Encapsulation, GRE) tunnel. Certainly, the network tunnel may alternatively be another tunnel.

In addition, the physical link or the network tunnel between the first network device and the third network device is mainly used to synchronize tunnel entries in the site and transmit data packets in the site, and does not need to be advertised to a network outside the site. Therefore, network addresses on ports that are on network devices in the first site and used to establish physical links may all be set to private network addresses, and even different sites may use a same address space. This can reduce consumption of network address resources of an operator by an SD-WAN network.

In this embodiment of this application, after obtaining the site prefix and the site identifier of the second site, the first network device may add the site prefix and site identifier of the second site to the stored routing table as the first routing entry. In this way, the first network device may store only one routing entry for one site, to avoid a large quantity of duplicate routing entries, and also avoid updating of a routing table caused by a change of a status of a network device. In addition, the first network device may further store the tunnel identifier and the tunnel attribute information of the tunnel established between the first network device and the second site as tunnel entries in the tunnel table, and may further store a tunnel entry of a tunnel established between another network device in the first site and the second site in the tunnel table. In this way, the first network device may subsequently send a data packet to the second site through the tunnel established between another network device in the first site and the second site, so that more tunnels do not need to be established, resources are saved, and tunnel utilization is improved.

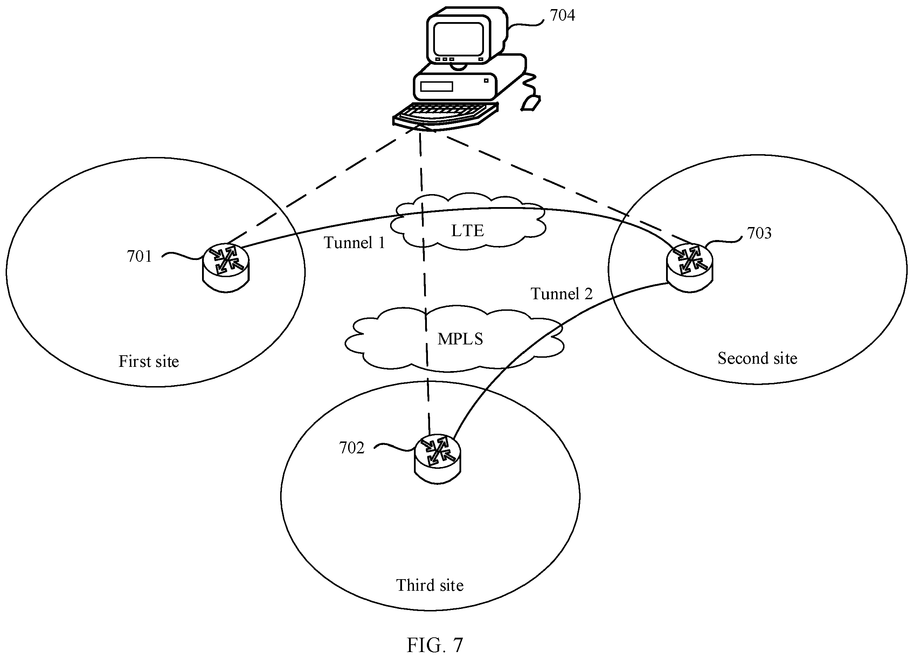

FIG. 7 is a diagram of a system architecture in a routing entry generation method according to an embodiment of this application. As shown in FIG. 7, the system includes a network device 701, a network device 702, a network device 703, and a control device 704. The network device 701 is a network device deployed in a first site, and the network device 702 is a network device deployed in a third site, and the network device 703 is a network device deployed in a second site. The network device 701, the network device 702, and the network device 703 may be connected to the control device 704 in a wireless or wired manner to perform communication.

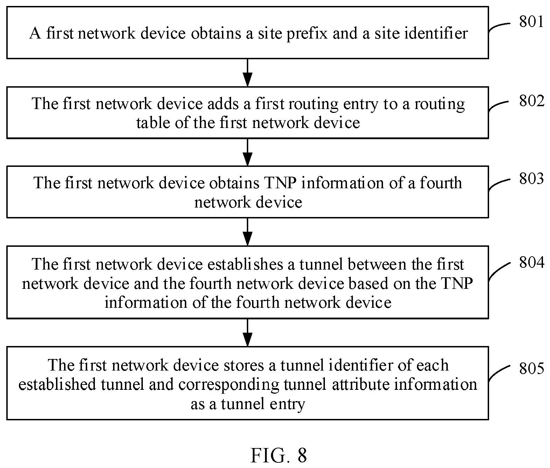

The network device 701 and the network device 703 access a same transport network, that is, an LTE network. The network device 702 and the network device 703 access a same transport network, that is, an MPLS network. In this way, a tunnel 1 may be established between the network device 701 and the network device 703 through the LTE network, a tunnel 2 may be established between the network device 702 and the network device 703 through the MPLS network, and the network devices may generate routing entries. For a specific implementation, refer to related descriptions in the following embodiment in FIG. 8. Details are not described herein.

It should be noted that, with reference to related descriptions in FIG. 1, the system architecture shown in FIG. 7 may alternatively not include the control device 704. This is not limited in this embodiment of this application.

Optionally, in the system shown in FIG. 7, an example in which one network device is deployed in each of the first site, the second site, and the third site is used for description. Certainly, in another possible case, more than two network devices may be deployed in each of the first site, the second site, and the third site, and quantities of network devices deployed in the first site, the second site, and the third site may be the same or different.

Based on the system architecture in FIG. 7, embodiments of this application provide a routing entry generation method. The method is performed by a first network device. In this embodiment of this application, the first network device is deployed in the first site, the second network device is deployed in a third site, and a fourth network device is deployed in the second site. The first network device and the fourth network device access a first transport network, and the second network device and the fourth network device access a second transport network and establish a tunnel. For example, the first network device may be the network device 701 shown in FIG. 7, the second network device may be the network device 702 shown in FIG. 7, and the fourth network device may be the network device 703 shown in FIG. 7. Refer to FIG. 8. The method includes the following steps.

Based on the foregoing description, a network device in the first site and a network device in the second site may establish a tunnel and obtain a site prefix and a site identifier of a peer site through the control device, and a network device in the second site and a network device in the third site may establish a tunnel and obtain a site prefix and a site identifier of a peer site through the control device. Alternatively, the control device may not be used. Regardless of whether the control device is used or not, a method for generating a routing entry by the first network device is similar. Therefore, the following describes the routing entry generation method by using an example in which the control device is used.

Step 801: The first network device obtains a site prefix and a site identifier, where the site identifier is used to identify the second site, and a network address of the second network device matches the site prefix.

The second network device is located in the third site, the site identifier obtained by the first network device is used to identify the second site, and the network address of the second network device matches the site prefix obtained by the first network device. Therefore, it may be determined that the site prefix obtained by the first network device is a site prefix of the third site, and the site identifier obtained by the first network device is a site identifier of the second site.

It should be noted that, after being powered on, the second network device may register with the control device, to obtain configuration information of the second network device from the control device. The configuration information may include a site identifier and the site prefix of the second site, TNP information of the second network device, and the like. Then, the second network device may send the site prefix and the site identifier of the second site to the control device. After receiving the site prefix and the site identifier of the second site that are sent by the second network device, the control device may determine, based on a network topology structure, that network devices that access a same transport network as the second network device include the fourth network device, a tunnel is established between the second network device and the fourth network device, and the fourth network device and the first network device access the same transport network, but the first network device and the second network device do not access a same transport network. That is, the second network device may communicate with the fourth network device, and the fourth network device may communicate with the first network device. However, the first network device cannot directly communicate with the second network device. Therefore, the control device may send the site identifier of the second site and the site prefix of the third site to the first network device.

Step 802: The first network device adds a first routing entry to a routing table of the first network device, where the first routing entry includes the site prefix and the site identifier, and the first routing entry is used to send a data packet to the second network device.

After generating and storing the routing entry in steps 801 and 802, the first network device may further generate and store a tunnel entry in steps 803 to 805.

Step 803: The first network device obtains TNP information of the fourth network device, where the TNP information of the fourth network device corresponds to the first transport network.

In this embodiment of this application, when sending the site identifier of the second site and the site prefix of the third site to the first network device, the control device further sends the TNP information of the fourth network device. In this way, when receiving the site identifier of the second site and the site prefix of the third site that are sent by the control device, the first network device may further receive the TNP information of the fourth network device. The TNP information corresponds to the first transport network.

For a related description of the TNP information, refer to the related description in step 603 in the foregoing embodiment. Details are not described herein again.

Step 804: The first network device establishes a tunnel between the first network device and the fourth network device based on the TNP information of the fourth network device.

Implementation processes in which the first network device establishes tunnels between the first network device and other network devices are basically the same. Therefore, step 804 is not described in detail in this embodiment of this application. For a related description in step 804, refer to the related description in step 604 in the foregoing embodiment.

Step 805: The first network device stores a tunnel identifier of each tunnel established between the first network device and the fourth network device and corresponding tunnel attribute information as a tunnel entry.

Implementation processes in which the first network device stores tunnel entries of tunnels established between the first network device and other network devices are basically the same. Therefore, step 805 is not described in detail in this embodiment of this application. For a related description in step 805, refer to the related description in step 605 in the foregoing embodiment.

In this embodiment of this application, a tunnel cannot be established between the first network device and the second network device. That is, the first network device and the second network device cannot communicate with each other through the tunnel, and the first network device establishes tunnels with both the second network device and the fourth network device. In this case, a data packet between the first network device and the second network device may be forwarded by the fourth network device. Therefore, the first network device may add the site prefix of the third site and the site identifier of the second site to the stored routing table as a routing entry. In this way, the first network device may store only one routing entry for one site. This avoids a large quantity of duplicate routing entries, and can also avoid updating a routing table caused by a change of a status of the network device. In addition, when the first network device is to send a data packet to the second network device, the first network device may send the data packet to the fourth network device through the tunnel between the first network device and the fourth network device based on the routing entry. Further, the fourth network device sends the data packet to the second network device through a tunnel between the fourth network device and the second network device. A problem that the first network device cannot send the data packet to the second network device because a tunnel cannot be established between the first network device and the second network device is resolved.

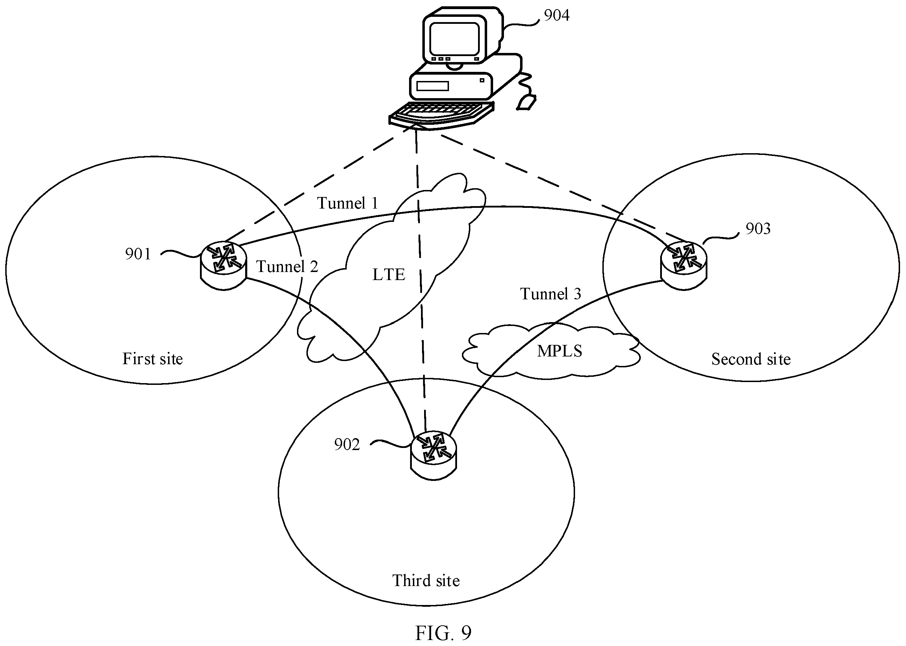

FIG. 9 is a diagram of a system architecture in a routing entry generation method according to an embodiment of this application. As shown in FIG. 9, the system includes a network device 901, a network device 902, a network device 903, and a control device 904. The network device 901 is a network device deployed in a first site, and the network device 902 is a network device deployed in a third site, and the network device 903 is a network device deployed in a second site. The network device 901, the network device 902, and the network device 903 may be connected to the control device 904 in a wireless or wired manner to perform communication.

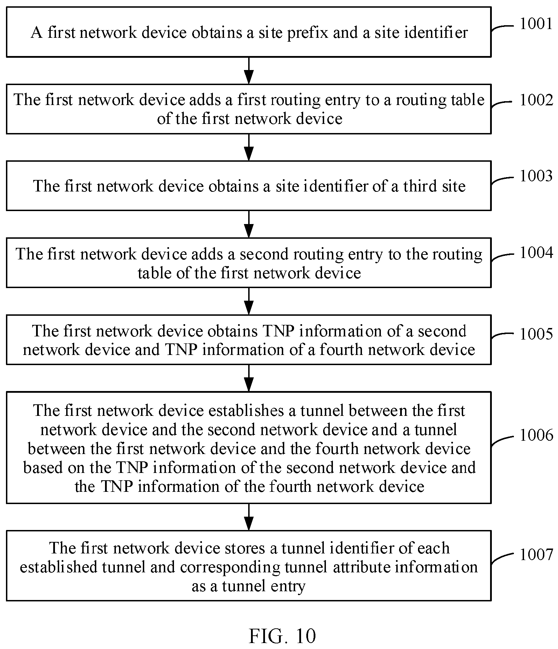

The network device 901, the network device 902, and the network device 903 access a same transport network, that is, an LTE network. The network device 902 and the network device 903 access a same transport network, that is, an MPLS network. In this way, a tunnel 1 may be established between the network device 901 and the network device 903 through the LTE network, a tunnel 2 may be established between the network device 901 and the network device 902 through the LTE network, a tunnel 3 may be established between the network device 902 and the network device 903 through the MPLS network, and the network devices may generate routing entries. For a specific implementation, refer to related descriptions in the following embodiment in FIG. 10. Details are not described herein.

It should be noted that, with reference to related descriptions in FIG. 1, the system architecture shown in FIG. 9 may alternatively not include the control device 904. This is not limited in this embodiment of this application.

Optionally, in the system shown in FIG. 9, an example in which one network device is deployed in each of the first site, the second site, and the third site is used for description. Certainly, in another possible case, more than two network devices may be deployed in each of the first site, the second site, and the third site, and quantities of network devices deployed in the first site, the second site, and the third site may be the same or different.

Based on the system architecture in FIG. 9, embodiments of this application provide a routing entry generation method. The method is performed by a first network device. In this embodiment of this application, the first network device is deployed in the first site, a second network device is deployed in the third site, and a fourth network device is deployed in the second site. The first network device, the second network device, and the fourth network device all access a first transport network, and the second network device and the fourth network device access a second transport network and establish a tunnel. For example, the first network device may be the network device 901 shown in FIG. 9, the second network device may be the network device 902 shown in FIG. 9, and the fourth network device may be the network device 903 shown in FIG. 9. Refer to FIG. 10. The method includes the following steps.

Based on the foregoing description, a network device in the first site, a network device in the second site, and a network device in the third site may establish a tunnel and obtain a site prefix and a site identifier of a peer site through the control device. Alternatively, the control device is not used. Regardless of whether the control device is used or not, a method for generating a routing entry by the first network device is similar. Therefore, the following describes the routing entry generation method by using an example in which the control device is used.

Step 1001: The first network device obtains a site prefix and a site identifier, where the site identifier is used to identify the second site, and a network address of the second network device matches the site prefix.

The second network device is located in the third site, the site identifier obtained by the first network device is used to identify the second site, and the network address of the second network device matches the site prefix obtained by the first network device. Therefore, it may be determined that the site prefix obtained by the first network device is a site prefix of the third site, and the site identifier obtained by the first network device is a site identifier of the second site.

It should be noted that, after being powered on, the second network device may register with the control device, to obtain configuration information of the second network device from the control device. The configuration information may include a site identifier and the site prefix of the second site, TNP information of the second network device, and the like. Then, the second network device may send the site prefix and the site identifier of the second site to the control device. After receiving the site prefix and the site identifier of the second site that are sent by the second network device, the control device may determine, based on a network topology structure, that network devices that access a same transport network as the second network device include the first network device and the fourth network device, a tunnel is established between the second network device and the fourth network device, and the fourth network device and the first network device access the same transport network. That is, the first network device may communicate with the second network device, the first network device may also communicate with the fourth network device, and the fourth network device may communicate with the second network device. Therefore, the control device may send the site identifier of the second site and the site prefix of the third site to the first network device.

Step 1002: The first network device adds a first routing entry to a routing table of the first network device, where the first routing entry includes the site prefix and the site identifier, and the first routing entry is used to send a data packet to the second network device.

Step 1003: The first network device obtains a site identifier of the third site.

In this embodiment of this application, the first network device may communicate with the second network device. Therefore, in consideration of high reliability, in addition to the site identifier of the second site and the site prefix of the third site, the first network device may further obtain the site identifier of the third site.

It should be noted that while sending the site identifier of the second site and the site prefix of the third site to the first network device, the control device may send the site identifier of the third site to the first network device. Certainly, the control device may first send the site identifier of the second site and the site prefix of the third site to the first network device, and then send the site identifier of the third site to the first network device.

Step 1004: The first network device adds a second routing entry to the routing table of the first network device, where the second routing entry includes the site prefix of the third site and the site identifier of the third site, and the second routing entry is used to send a data packet to the second network device.

After generating and storing the routing entry in steps 1001 to 1004, the first network device may further generate and store a tunnel entry in steps 1005 to 1007.

Step 1005: The first network device obtains TNP information of the second network device and TNP information of the fourth network device.

In this embodiment of this application, when sending the site identifier of the second site and the site prefix of the third site to the first network device, the control device further sends the TNP information of the fourth network device. In this way, when receiving the site identifier of the second site and the site prefix of the third site that are sent by the control device, the first network device may further receive the TNP information of the fourth network device. The TNP information corresponds to the first transport network. Similarly, when sending the site identifier of the third site to the first network device, the control device further sends the TNP information of the second network device. In this way, when receiving the site identifier of the third site sent by the control device, the first network device may further receive the TNP information of the second network device.

For a related description of the TNP information, refer to the related description in step 503 in the foregoing embodiment. Details are not described herein again.

Step 1006: The first network device establishes a tunnel between the first network device and the second network device and a tunnel between the first network device and the fourth network device based on the TNP information of the second network device and the TNP information of the fourth network device.

In some embodiments, the first network device may directly establish the tunnel between the first network device and the second network device based on the TNP information of the second network device, and establish the tunnel between the first network device and the fourth network device based on the TNP information of the fourth network device.

In some other embodiments, the first network device may obtain a priority of the second site and a priority of the third site. If the priority of the third site is higher than the priority of the second site, the first network device may establish the tunnel between the first network device and the second network device based on the TNP information of the second network device. Then, the first network device detects connectivity of the tunnel between the first network device and the second network device. If the detection fails, the first network device may establish the tunnel between the first network device and the fourth network device based on the TNP of the fourth network device. If the detection succeeds, the first network device may temporarily skip establishing the tunnel between the first network device and the fourth network device, and establish the tunnel between the first network device and the fourth network device until the tunnel between the first network device and the second network device is faulty and cannot be connected.

It should be noted that the control device may send the priority of the second site and the priority of the third site to the first network device while sending the site identifier and the site prefix. Certainly, the control device may alternatively first send the site identifier and the site prefix, and then send the priority of the second site and the priority of the third site.

In this embodiment of this application, to transmit a data packet between the first network device and the second network device, a routing entry is generated and a tunnel is established. Therefore, the control device usually sets the priority of the third site to be higher. That is, the priority of the third site is higher than the priority of the second site. In this way, the first network device preferentially establishes the tunnel between the first network device and the second network device. Then, a data packet transmitted between the first network device and the second network device is preferentially transmitted through the tunnel directly connected between the two devices, and does not need to be forwarded by the fourth network device, to reduce network overheads and improve packet transmission efficiency.

Implementation processes in which the first network device establishes tunnels between the first network device and other network devices are basically the same. Therefore, step 1006 is not described in detail in this embodiment of this application. For a related description in step 1006, refer to the related description in step 604 in the foregoing embodiment. In addition, for an implementation process in which the first network device detects connectivity of the tunnel between the first network device and the second network device, refer to related descriptions in step 605 in the foregoing embodiment.

Step 1007: The first network device stores a tunnel identifier of each established tunnel and corresponding tunnel attribute information as a tunnel entry.

Implementation processes in which the first network device stores tunnel entries of tunnels established between the first network device and other network devices are basically the same. Therefore, step 1007 is not described in detail in this embodiment of this application. For a related description in step 1007, refer to the related description in step 605 in the foregoing embodiment.

In this embodiment of this application, the first network device may add the site prefix of the third site and the site identifier of the second site to the stored routing table as the first routing entry, and add the site prefix of the third site and the site identifier of the third site to the stored routing table as the second routing entry. In this way, the first network device may store only one routing entry for one site. This avoids a large quantity of duplicate routing entries, and can also avoid updating a routing table caused by a change of a status of the network device. In addition, the first network device may preferentially establish the tunnel between the first network device and the second network device. When the tunnel between the first network device and the second network device is unavailable, the first network device may establish the tunnel between the first network device and the fourth network device, and further forward, to the second network device through the fourth network device, a data packet sent to the second network device. Reliability of sending data packets is improved.

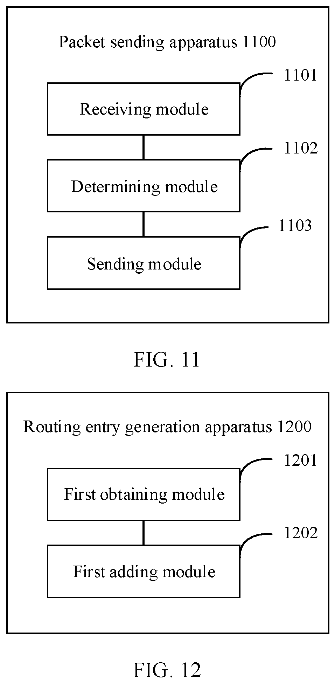

FIG. 11 is a schematic diagram of a structure of a packet sending apparatus according to an embodiment of this application. The packet sending apparatus may be implemented as a part or entirety of a first network device by software, hardware, or a combination thereof. The first network device is a network device deployed in a first site. The first network device stores a routing table, the routing table includes a plurality of routing entries, and each of the plurality of routing entries includes a site prefix and a corresponding site identifier. Refer to FIG. 11. The apparatus includes a receiving module 1101, a determining module 1102, and a sending module 1103.

The receiving module 1101 is configured to receive a first data packet, where the first data packet carries a destination address, and the first network device is a network device deployed in a first site. That is, the receiving module 1101 is configured to perform the operation of step 201 in the embodiment in FIG. 2.

The determining module 1102 is configured to determine a target routing entry from the routing table based on the destination address carried in the first data packet, where the destination address carried in the first data packet matches a site prefix included in the target routing entry, and a site identifier included in the target routing entry is used to identify a second site. That is, the determining module 1102 is configured to perform the operation of step 202 in the embodiment in FIG. 2.

The sending module 1103 is configured to send the first data packet to a network device deployed in the second site. That is, the sending module 1103 is configured to perform the operation of step 203 in the embodiment in FIG. 2.

Optionally, the sending module 1103 includes:
a determining submodule, configured to determine one or more tunnel entries based on the site identifier included in the target routing entry, where the one or more tunnel entries are tunnel entries corresponding to tunnels established between the first site and the second site;
a selection submodule, configured to select a tunnel entry from the one or more tunnel entries as a target tunnel entry; and
a sending submodule, configured to send the first data packet through a tunnel corresponding to the target tunnel entry.

Optionally, the first network device stores one tunnel table, each tunnel entry in the tunnel table includes a tunnel identifier and corresponding tunnel attribute information, the tunnel table stores tunnel entries corresponding to a plurality of sites, the plurality of sites are sites that establish tunnels with the first site, and the plurality of sites include the second site.

The determining submodule is mainly configured to:
determine one or more tunnel identifiers based on the site identifier included in the target routing entry, where the one or more tunnel identifiers are identifiers of the tunnels established between the first site and the second site; and
determine the one or more tunnel entries from the tunnel table based on the one or more tunnel identifiers.

Optionally, the first network device stores a plurality of tunnel tables, the plurality of tunnel tables one-to-one correspond to a plurality of sites, the plurality of sites are sites that establish tunnels with the first site, and the plurality of sites include the second site.

The determining submodule is mainly configured to:
determine an identifier of a target tunnel table based on the site identifier included in the target routing entry, where the target tunnel table is a tunnel table corresponding to the second site in the plurality of tunnel tables; and
determine the target tunnel table from the plurality of tunnel tables based on the identifier of the target tunnel table, and determine tunnel entries stored in the target tunnel table as the one or more tunnel entries.

Optionally, each of the one or more tunnel entries further includes a connection identifier, and the connection identifier is used to indicate whether a corresponding tunnel is connected.

The selection submodule is mainly configured to:
select tunnel entries with connection identifiers set to valid from the one or more tunnel entries; and
select a tunnel entry from the selected tunnel entries as the target tunnel entry.

In this application, each routing entry in the routing table stored in the first network device in the first site includes a site prefix and a corresponding site identifier. Therefore, when receiving the first data packet, the first network device may determine the target routing entry from the routing table. Because the site identifier in the target routing entry is used to identify the second site, the first network device may directly send the first data packet to the second site based on the site identifier in the target routing entry. That is, the first network device may directly send, to the second site based on the site identifier of the second site, a data packet sent from the first site to the second site, without determining a port that is of a network device in the second site and that the data packet is specifically sent to. In addition, the first network device may store only one routing entry for one site. This avoids a large quantity of duplicate routing entries, and can also avoid updating of a routing table caused by a change of a status of a network device.

It should be noted that, when the packet sending apparatus provided in the foregoing embodiment sends a packet, division into the foregoing function modules is merely used as an example for description. In actual application, the foregoing functions may be allocated to different function modules and implemented according to a requirement. In other words, an internal structure of the apparatus may be divided into different function modules to implement all or some of the functions described above. In addition, the packet transmission apparatus provided in the foregoing embodiment is based on the same inventive concept as the embodiment of the packet transmission method. For a specific implementation process, refer to the method embodiments. Details are not described herein again.

FIG. 12 is a schematic diagram of a structure of a routing entry generation apparatus according to an embodiment of this application. The packet sending apparatus may be implemented as a part or entirety of a first network device by software, hardware, or a combination thereof. The first network device is deployed in a first site. Refer to FIG. 12. The apparatus includes a first obtaining module 1201 and a first adding module 1202.

The first obtaining module 1201 is configured to obtain a site prefix and a site identifier, where the site identifier is used to identify a second site, and a network address of a second network device matches the site prefix. That is, the first obtaining module 1201 is configured to perform an operation of step 601 in the embodiment in FIG. 6, step 801 in the embodiment in FIG. 8, or step 1001 in the embodiment in FIG. 10.

The first adding module 1202 is configured to add a first routing entry to a routing table of the first network device, where the first routing entry includes the site prefix and the site identifier, and the first routing entry is used to send a data packet to the second network device. That is, the first adding module 1202 is configured to perform an operation of step 602 in the embodiment in FIG. 6, step 802 in the embodiment in FIG. 8, or step 1002 in the embodiment in FIG. 10.

Optionally, the second network device is deployed in the second site, and the first network device and the second network device access one or more same transport networks.

Optionally, the apparatus further includes:
a second obtaining module, configured to obtain one or more pieces of transport network port TNP information of the second network device, where the one or more pieces of TNP information one-to-one correspond to the one or more transport networks;
a first establishment module, configured to establish a tunnel between the first network device and the second network device based on the one or more pieces of TNP information; and
a storage module, configured to store a tunnel identifier of each established tunnel and corresponding tunnel attribute information as a tunnel entry.

Optionally, one or more third network devices are further deployed in the first site, each of the one or more third network devices establishes a tunnel with a network device in the second site, and each of the one or more third network devices further establishes a physical link with the first network device.

The apparatus further includes:
a third obtaining module, configured to obtain, from each third network device through a physical link between the first network device and the corresponding third network device, a tunnel entry corresponding to a tunnel between the corresponding third network device and the network device in the second site, and store the obtained tunnel entry.

Optionally, the second network device is deployed in a third site, a fourth network device is deployed in the second site, the first network device and the fourth network device access a first transport network, and the second network device and the fourth network device access a second transport network and establish a tunnel.

Optionally, the apparatus further includes:
a fourth obtaining module, configured to obtain TNP information of the fourth network device, where the TNP information of the fourth network device corresponds to the first transport network;
a second establishment module, configured to establish a tunnel between the first network device and the fourth network device based on the TNP information of the fourth network device; and
a storage module, configured to store a tunnel identifier of each established tunnel and corresponding tunnel attribute information as a tunnel entry.

Optionally, the second network device is deployed in a third site, a fourth network device is deployed in the second site, the first network device, the second network device, and the fourth network device all access a first transport network, and the second network device and the fourth network device access a second transport network and establish a tunnel.

Optionally, the apparatus further includes:
a fifth obtaining module, configured to obtain a site identifier of the third site; and
a second adding module, configured to add a second routing entry to the routing table of the first network device, where the second routing entry includes the site identifier of the third site and the site prefix, and the second routing entry is used to send a data packet to the second network device.

Optionally, the apparatus further includes:
a sixth obtaining module, configured to obtain TNP information of the second network device and TNP information of the fourth network device;
a third establishment module, configured to establish a tunnel between the first network device and the second network device and a tunnel between the first network device and the fourth network device based on the TNP information of the second network device and the TNP information of the fourth network device; and
a storage module, configured to store a tunnel identifier of each established tunnel and corresponding tunnel attribute information as a tunnel entry.

Optionally, the third establishment module is mainly configured to:
obtain a priority of the second site and a priority of the third site;
if the priority of the third site is higher than the priority of the second site, establish the tunnel between the first network device and the second network device based on the TNP information of the second network device;
detect connectivity of the tunnel between the first network device and the second network device; and
if the detection fails, establish the tunnel between the first network device and the fourth network device based on the TNP of the fourth network device.

Optionally, the storage module is mainly configured to:
detect connectivity of each established tunnel; and
store a tunnel identifier of each tunnel on which connectivity detection succeeds, corresponding tunnel attribute information, and a connection identifier set to valid as a tunnel entry; and/or store a tunnel identifier of each tunnel on which connectivity detection fails, corresponding tunnel attribute information, and a connection identifier set to invalid as a tunnel entry.

In this embodiment of this application, after obtaining the site prefix and the site identifier of the second site, the first network device may add the site prefix and site identifier of the second site to the stored routing table as the first routing entry. In this way, the first network device may store only one routing entry for one site, to avoid a large quantity of duplicate routing entries, and also avoid updating of a routing table caused by a change of a status of a network device. In addition, the first network device may further store the tunnel identifier and the tunnel attribute information of the tunnel established between the first network device and the second site as tunnel entries in the tunnel table, and may further store a tunnel entry of a tunnel established between another network device in the first site and the second site in the tunnel table. In this way, the first network device may subsequently send a data packet to the second site through the tunnel established between another network device in the first site and the second site, so that more tunnels do not need to be established, resources are saved, and tunnel utilization is improved.

It should be noted that, when the routing entry generation apparatus provided in the foregoing embodiment generates a routing entry, division into the foregoing function modules is merely used as an example for description. In actual application, the foregoing functions may be allocated to different function modules and implemented according to a requirement. In other words, an internal structure of the apparatus may be divided into different function modules to implement all or some of the functions described above. In addition, the routing entry generation apparatus provided in the foregoing embodiment is based on a same inventive concept as the embodiments of the routing entry generation methods. For a specific implementation process, refer to the method embodiments. Details are not described herein again.

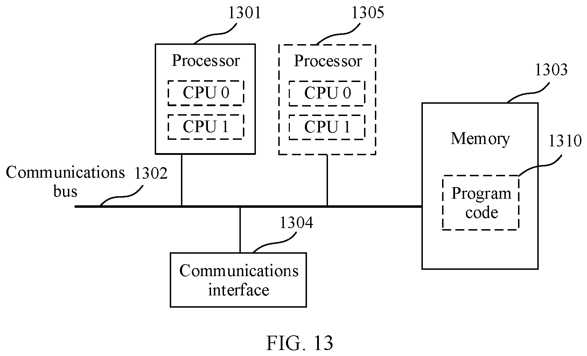

FIG. 13 is a schematic diagram of a structure of a network device according to an embodiment of this application. The network device may be any network device shown in FIG. 1, FIG. 4, FIG. 5, FIG. 7, or FIG. 9. The network device includes at least one processor 1301, a communications bus 1302, a memory 1303, and at least one communications interface 1304.

The processor 1301 may be a microprocessor (including a central processing unit (central processing unit, CPU) or the like), a network processor (NP), a microprocessor, or one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The communications bus 1302 is configured to transmit information between the foregoing components. The communications bus 1302 may be classified into an address bus, a data bus, a control bus, and the like. For ease of representation, only one thick line is used to represent the bus in the figure, but this does not mean that there is only one bus or only one type of bus.

The memory 1303 may be a read-only memory (read-only memory, ROM), a random access memory (random access memory, RAM), an electrically erasable programmable read-only memory (Electrically Erasable Programmable Read-Only Memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be configured to carry or store expected program code in a form of an instruction or a data structure and that can be accessed by a network. However, this is not limited hereto. The memory 1303 may exist independently, and is connected to the processor 1301 through the communications bus 1302. The memory 1303 may alternatively be integrated into the processor 1301.

The communications interface 1304 is configured to communicate with another device or a communications network through any apparatus such as a transceiver. The communications interface 1304 includes a wired communications interface, and may further include a wireless communications interface. The wired communications interface may be, for example, an Ethernet interface. The Ethernet interface may be an optical interface, an electrical interface, or a combination thereof. The wireless communications interface may be a wireless local area network (Wireless Local Area Networks, WLAN) interface, a cellular network communications interface, a combination thereof, or the like.

In a specific implementation, in an embodiment, the processor 1301 may include one or more CPUs, for example, a CPU 0 and a CPU 1 in FIG. 13.

In a specific implementation, in an embodiment, the network device may include a plurality of processors, for example, the processor 1301 and a processor 1305 in FIG. 13. Each of the processors may be a single-core processor, or may be a multi-core processor. The processor herein may refer to one or more devices, circuits, and/or processing cores configured to process data (such as computer program instructions).

In some embodiments, the memory 1303 is configured to store program code 1310 for executing the solutions in this application, and the processor 1301 may execute the program code 1310 stored in the memory 1303. That is, the network device may implement, by using the processor 1301 and the program code 1310 in the memory 1303, the packet sending method provided in the embodiment in FIG. 2 and the routing entry generation method provided in the embodiments in FIG. 6, FIG. 8, and FIG. 10.

All or some of the foregoing embodiments may be implemented through software, hardware, firmware, or any combination thereof. When the software is used to implement the embodiments, all or some of the embodiments may be implemented in a form of a computer program **product.** The computer program product includes one or more computer instructions. When the computer instructions are **loaded** and executed on a computer, all or some of the procedure or functions according to embodiments of this **application** are generated. The computer may be a general-purpose computer, a dedicated computer, a computer network, or another programmable apparatus. The computer instructions may be stored in a computer-readable storage medium or may be transmitted from a computer-readable storage medium to another computer-readable storage **medium.** For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave, or the like) manner. The computer-readable storage medium may be any usable medium accessible by a computer, or a data storage device, such as a server or a data center, integrating one or more usable media. The usable **medium** may be a magnetic medium (for example, a floppy disk, a hard disk, or a magnetic tape), an optical medium (for example, a digital versatile disc (Digital Versatile Disc, DVD), a semiconductor medium (for example, a solid-state disk (Solid State Disk, SSD)), or the like. It should be noted that the computer-readable storage medium mentioned in this application may be a non-volatile storage medium. In other words, the computer-readable storage medium may be a non-transitory storage medium.

In this application, terms such as "first" and "second" are used to distinguish between same items or similar items that have basically same functions. It should be understood that there is no logical or time sequence dependency between "first", "second", and "n^{th}", and a quantity and an execution sequence are not limited. It should also be understood that although terms such as "first" and "second" are used in the following description to describe various elements, these elements should not be limited by the terms. These terms are merely used to distinguish one element from another element. For example, without departing from the scope of the various examples, a first image may be referred to as a second image, and similarly, a second image may be referred to as a first image. Both the first image and the second image may be images, and in some cases, may be separate and different images.

The term "at least one" in this application means one or more, and the term "a plurality of" in this application means two or more than two. For example, "a plurality of second messages" means two or more than two second messages. The terms "system" and "network" may be used interchangeably in this specification.

It should be understood that the terms used in the descriptions of the various examples in the specification are merely intended to describe specific examples but are not intended to constitute a limitation. The terms "one" ("a" and "an") and "the" of singular forms used in the descriptions of the various examples and the appended claims are also intended to include plural forms, unless otherwise specified in the context clearly.

It should further be understood that, the term "and/or" used in this specification indicates and includes any or all possible combinations of one or more items in associated listed items. The term "and/or" in this specification describes an association relationship for describing associated objects and represents that three relationships may exist. For example, A and/or B may represent the following three cases: Only A exists, both A and B exist, and only B exists. In addition, the character "/" in this application usually indicates an "or" relationship between the associated objects.

It should further be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It should be understood that determining B based on A does not mean that B is determined based on only A, but B may alternatively be determined based on A and/or other information.

It should further be understood that the term "includes" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should further be understood that, the term "and/or" used in this specification indicates and includes any or all possible combinations of one or more items in associated listed items. The term "and/or" in this specification describes an association relationship for describing associated objects and represents that three relationships may exist. For example, A and/or B may represent the following three cases: Only A exists, both A and B exist, and only B exists. In addition, the character "/" in this application usually indicates an "or" relationship between the associated objects.

It should be further understood that the term "if" may be interpreted as a meaning "when" ("when" or "upon"), "in response to determining", or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that "one embodiment", "an embodiment", or "a possible implementation" mentioned throughout specification means that particular features, structures, or characteristics related to the embodiments or implementations are included in at least one embodiment of this application. Therefore, "in one embodiment", "in an embodiment", or "in a possible implementation" appearing throughout this specification does not necessarily refer to a same embodiment. In addition, these particular features, structures, or characteristics may be combined in one or more embodiments in any proper manner.

## Claims

1. A packet sending method, wherein the method is performed by a first network device, the first network device stores a routing table, the routing table comprises a plurality of routing entries, each of the plurality of routing entries comprises a site prefix and a corresponding site identifier, and the method comprises:
receiving (201), by the first network device, a first data packet, wherein the first data packet carries a destination address, and the first network device is a network device deployed in a first site;
determining (202), by the first network device, a target routing entry from the routing table based on the destination address, wherein the destination address matches a site prefix comprised in the target routing entry, and a site identifier comprised in the target routing entry is used to identify a second site; and
sending (203), by the first network device, the first data packet to a network device deployed in the second site.

2. The method according to claim 1, wherein the sending, by the first network device, the first data packet to a network device deployed in the second site comprises:
determining, by the first network device, one or more tunnel entries based on the site identifier comprised in the target routing entry, wherein the one or more tunnel entries are tunnel entries corresponding to tunnels established between the first site and the second site;
selecting, by the first network device, a tunnel entry from the one or more tunnel entries as a target tunnel entry; and
sending, by the first network device, the first data packet through a tunnel corresponding to the target tunnel entry.

3. The method according to claim 2, wherein the first network device stores one tunnel table, each tunnel entry in the tunnel table comprises a tunnel identifier and corresponding tunnel attribute information, the tunnel table stores tunnel entries corresponding to a plurality of sites, the plurality of sites are sites that establish tunnels with the first site, and the plurality of sites comprise the second site; and
the determining, by the first network device, one or more tunnel entries based on the site identifier comprised in the target routing entry comprises:
determining, by the first network device, one or more tunnel identifiers based on the site identifier comprised in the target routing entry, wherein the one or more tunnel identifiers are identifiers of the tunnels established between the first site and the second site; and
determining, by the first network device, the one or more tunnel entries from the tunnel table based on the one or more tunnel identifiers.

4. The method according to claim 2, wherein the first network device stores a plurality of tunnel tables, the plurality of tunnel tables one-to-one correspond to a plurality of sites, the plurality of sites are sites that establish tunnels with the first site, and the plurality of sites comprise the second site; and
the determining, by the first network device, one or more tunnel entries based on the site identifier comprised in the target routing entry comprises:
determining, by the first network device, an identifier of a target tunnel table based on the site identifier comprised in the target routing entry, wherein the target tunnel table is a tunnel table corresponding to the second site in the plurality of tunnel tables; and
determining, by the first network device, the target tunnel table from the plurality of tunnel tables based on the identifier of the target tunnel table, and determining tunnel entries stored in the target tunnel table as the one or more tunnel entries.

5. The method according to any one of claims 2 to 4, wherein each of the one or more tunnel entries further comprises a connection identifier, and the connection identifier is used to indicate whether a corresponding tunnel is connected; and
the selecting, by the first network device, a tunnel entry from the one or more tunnel entries as a target tunnel entry comprises:
selecting, by the first network device, tunnel entries with connection identifiers being valid from the one or more tunnel entries; and
selecting, by the first network device, a tunnel entry from the selected tunnel entries as the target tunnel entry.

6. A routing entry generation method, wherein the method is performed by a first network device, the first network device is deployed in a first site, and the method comprises:
obtaining (601, 801, 1001), by the first network device, a site prefix and a site identifier, wherein the site identifier is used to identify a second site, and a network address of a second network device matches the site prefix; and
adding (602, 802, 1002), by the first network device, a first routing entry to a routing table of the first network device, wherein the first routing entry comprises the site prefix and the site identifier, and the first routing entry is used to send a data packet to the second network device.

7. The method according to claim 6, wherein the second network device is deployed in the second site, and the first network device and the second network device access one or more same transport networks.

8. The method according to claim 7, wherein after the adding, by the first network device, a first routing entry to a routing table of the first network device, the method further comprises:
obtaining (603), by the first network device, one or more pieces of transport network port, TNP, information of the second network device, wherein the one or more pieces of TNP information one-to-one correspond to the one or more transport networks;
establishing (604), by the first network device, a tunnel between the first network device and the second network device based on the one or more pieces of TNP information; and
storing (605), by the first network device, a tunnel identifier of each established tunnel and corresponding tunnel attribute information as a tunnel entry.

9. The method according to claim 7, wherein one or more third network devices are further deployed in the first site, each of the one or more third network devices establishes a tunnel with a network device in the second site, and each of the one or more third network devices further establishes a physical link with the first network device; and
after the storing, by the first network device, a tunnel identifier of each established tunnel and corresponding tunnel attribute information as a tunnel entry, the method further comprises:
obtaining, by the first network device from each third network device through a physical link between the first network device and the corresponding third network device, a tunnel entry corresponding to a tunnel between the corresponding third network device and the network device in the second site, and storing the obtained tunnel entry.

10. The method according to claim 6, wherein the second network device is deployed in a third site, a fourth network device is deployed in the second site, the first network device and the fourth network device access a first transport network, and the second network device and the fourth network device access a second transport network and establish a tunnel.

11. The method according to claim 10, wherein after the adding, by the first network device, a first routing entry to a routing table of the first network device, the method further comprises:
obtaining (803), by the first network device, TNP information of the fourth network device, wherein the TNP information of the fourth network device corresponds to the first transport network;
establishing (804), by the first network device, a tunnel between the first network device and the fourth network device based on the TNP information of the fourth network device; and
storing (805), by the first network device, a tunnel identifier of each established tunnel and corresponding tunnel attribute information as a tunnel entry.

12. The method according to claim 6, wherein the second network device is deployed in a third site, a fourth network device is deployed in the second site, the first network device, the second network device, and the fourth network device all access a first transport network, and the second network device and the fourth network device access a second transport network and establish a tunnel.

13. The method according to claim 12, wherein after the adding, by the first network device, a first routing entry to a routing table of the first network device, the method further comprises:
obtaining (1003), by the first network device, a site identifier of the third site; and
adding (1004), by the first network device, a second routing entry to the routing table of the first network device, wherein the second routing entry comprises the site identifier of the third site and the site prefix, and the second routing entry is used to send a data packet to the second network device.

14. The method according to claim 12, wherein after the adding, by the first network device, a second routing entry to the routing table of the first network device, the method further comprises:
obtaining (1005), by the first network device, TNP information of the second network device and TNP information of the fourth network device;
establishing (1006), by the first network device, a tunnel between the first network device and the second network device and a tunnel between the first network device and the fourth network device based on the TNP information of the second network device and the TNP information of the fourth network device; and
storing (1007), by the first network device, a tunnel identifier of each established tunnel and corresponding tunnel attribute information as a tunnel entry.

15. A network device, applied to a first network device in a first site, wherein the network device is configured to implement the method according to any one of claims 1 to 14.

## Patentansprüche

1. Paketsendeverfahren, wobei das Verfahren durch eine erste Netzvorrichtung durchgeführt wird, die erste Netzvorrichtung eine Routing-Tabelle speichert, die Routing-Tabelle eine Vielzahl von Routing-Einträgen umfasst, jeder der Vielzahl von Routing-Einträgen ein Ortspräfix und eine entsprechende Ortskennung umfasst und das Verfahren Folgendes umfasst:
Empfangen (201), durch die erste Netzvorrichtung, eines ersten Datenpakets, wobei das erste Datenpaket eine Zieladresse enthält und die erste Netzvorrichtung eine Netzvorrichtung ist, die an einem ersten Ort eingesetzt wird;
Bestimmen (202), durch die erste Netzvorrichtung, eines Ziel-Routing-Eintrags aus der Routing-Tabelle basierend auf der Zieladresse, wobei die Zieladresse mit einem Ortspräfix, das in dem Ziel-Routing-Eintrag umfasst ist, übereinstimmt und eine Ortskennung, die in dem Ziel-Routing-Eintrag umfasst ist, dazu verwendet wird, einen zweiten Ort zu identifizieren; und
Senden (203), durch die erste Netzvorrichtung, des ersten Datenpakets an eine Netzvorrichtung, die an dem zweiten Ort eingesetzt wird.

2. Verfahren nach Anspruch 1, wobei das Senden, durch die erste Netzvorrichtung, des ersten Datenpakets an eine Netzvorrichtung, die an dem zweiten Ort eingesetzt wird, Folgendes umfasst:
Bestimmen, durch die erste Netzvorrichtung, eines oder mehrerer Tunneleinträge basierend auf der Ortskennung, die in dem Ziel-Routing-Eintrag umfasst ist, wobei der eine oder die mehreren Tunneleinträge Tunneleinträge sind, die Tunneln entsprechen, die zwischen dem ersten Ort und dem zweiten Ort hergestellt sind;
Auswählen, durch die erste Netzvorrichtung, eines Tunneleintrags aus dem einen oder den mehreren Tunneleinträgen als einen Zieltunneleintrag; und
Senden, durch die erste Netzvorrichtung, des ersten Datenpakets durch einen Tunnel hindurch, der dem Zieltunneleintrag entspricht.

3. Verfahren nach Anspruch 2, wobei die erste Netzvorrichtung eine Tunneltabelle speichert, jeder Tunneleintrag in der Tunneltabelle eine Tunnelkennung und entsprechende Tunnelattributinformationen umfasst, die Tunneltabelle Tunneleinträge speichert, die einer Vielzahl von Orten entsprechen, die Vielzahl von Orten Orte sind, die Tunnel zu dem ersten Ort herstellen, und die Vielzahl von Orten den zweiten Ort umfasst; und
das Bestimmen, durch die erste Netzvorrichtung, eines oder mehrerer Tunneleinträge basierend auf der Ortskennung, die in dem Ziel-Routing-Eintrag umfasst ist, Folgendes umfasst:
Bestimmen, durch die erste Netzvorrichtung, einer oder mehrerer Tunnelkennungen basierend auf der Ortskennung, die in dem Ziel-Routing-Eintrag umfasst ist, wobei die eine oder die mehreren Tunnelkennungen Kennungen der Tunnel sind, die zwischen dem ersten Ort und dem zweiten Ort hergestellt sind; und
Bestimmen, durch die erste Netzvorrichtung, des einen oder der mehreren Tunneleinträge aus der Tunneltabelle basierend auf der einen oder den mehreren Tunnelkennungen.

4. Verfahren nach Anspruch 2, wobei die erste Netzvorrichtung eine Vielzahl von Tunneltabellen speichert, die Vielzahl von Tunneltabellen einer Vielzahl von Orten eins zu eins entspricht, die Vielzahl von Orten Orte sind, die Tunnel zu dem ersten Ort herstellen, und die Vielzahl von Orten den zweiten Ort umfasst, und
das Bestimmen, durch die erste Netzvorrichtung, eines oder mehrerer Tunneleinträge basierend auf der Ortskennung, die in dem Ziel-Routing-Eintrag umfasst ist, Folgendes umfasst:
Bestimmen, durch die erste Netzvorrichtung, einer Kennung einer Zieltunneltabelle basierend auf der Ortskennung, die in dem Ziel-Routing-Eintrag umfasst ist, wobei die Zieltunneltabelle eine Tunneltabelle ist, die dem zweiten Ort in der Vielzahl von Tunneltabellen entspricht; und
Bestimmen, durch die erste Netzvorrichtung, der Zieltunneltabelle aus der Vielzahl von Tunneltabellen basierend auf der Kennung der Zieltunneltabelle und Bestimmen von Tunneleinträgen, die in der Zieltunneltabelle gespeichert sind, als den einen oder die mehreren Tunneleinträge.

5. Verfahren nach einem der Ansprüche 2 bis 4, wobei jeder des einen oder der mehreren Tunneleinträge ferner eine Verbindungskennung umfasst und die Verbindungskennung dazu verwendet wird, anzugeben, ob ein entsprechender Tunnel verbunden ist; und
das Auswählen, durch die erste Netzvorrichtung, eines Tunneleintrags aus dem einen oder den mehreren Tunneleinträgen als einen Zieltunneleintrag Folgendes umfasst:
Auswählen, durch die erste Netzvorrichtung, von Tunneleinträgen mit Verbindungskennungen, die gültig sind, aus dem einen oder den mehreren Tunneleinträgen; und
Auswählen, durch die erste Netzvorrichtung, eines Tunneleintrags aus den ausgewählten Tunneleinträgen als den Zieltunneleintrag.

6. Verfahren zur Erzeugung von Routing-Einträgen, wobei das Verfahren durch eine erste Netzvorrichtung durchgeführt wird, die erste Netzvorrichtung an einem ersten Ort eingesetzt wird und das Verfahren Folgendes umfasst:
Erlangen (601, 801, 1001), durch die erste Netzvorrichtung, eines Ortspräfixes und einer Ortskennung, wobei die Ortskennung dazu verwendet wird, einen zweiten Ort zu identifizieren, und eine Netzadresse einer zweiten Netzvorrichtung mit dem Ortspräfix übereinstimmt; und
Hinzufügen (602, 802, 1002), durch die erste Netzvorrichtung, eines ersten Routing-Eintrags zu einer Routing-Tabelle der ersten Netzvorrichtung, wobei der erste Routing-Eintrag das Ortspräfix und die Ortskennung umfasst und der erste Routing-Eintrag dazu verwendet wird, ein Datenpaket an die zweite Netzvorrichtung zu senden.

7. Verfahren nach Anspruch 6, wobei die zweite Netzvorrichtung an dem zweiten Ort eingesetzt wird und die erste Netzvorrichtung und die zweite Netzvorrichtung auf ein oder mehrere gleiche Transportnetze zugreifen.

8. Verfahren nach Anspruch 7, wobei das Verfahren nach dem Hinzufügen, durch die erste Netzvorrichtung, eines ersten Routing-Eintrags zu einer Routing-Tabelle der ersten Netzvorrichtung ferner Folgendes umfasst:
Erlangen (603), durch die erste Netzvorrichtung, eines oder mehrerer Transportnetzanschlussinformationselemente, TNP-Informationselemente, der zweiten Netzvorrichtung, wobei das eine oder die mehreren TNP-Informationselemente dem einen oder den mehreren Transportnetzen eins zu eins entsprechen;
Herstellen (604), durch die erste Netzvorrichtung, eines Tunnels zwischen der ersten Netzvorrichtung und der zweiten Netzvorrichtung basierend auf dem einen oder den mehreren TNP-Informationselementen; und
Speichern (605), durch die erste Netzvorrichtung, einer Tunnelkennung jedes hergestellten Tunnels und entsprechender Tunnelattributinformationen als einen Tunneleintrag.

9. Verfahren nach Anspruch 7, wobei eine oder mehrere dritte Netzvorrichtungen ferner an dem ersten Ort eingesetzt werden, jede der einen oder der mehreren dritten Netzvorrichtungen einen Tunnel zu einer Netzvorrichtung an dem zweiten Ort herstellt und jede der einen oder der mehreren dritten Netzvorrichtungen ferner eine physikalische Verknüpfung mit der ersten Netzvorrichtung herstellt; und
das Verfahren nach dem Speichern, durch die erste Netzvorrichtung, einer Tunnelkennung jedes hergestellten Tunnels und entsprechender Tunnelattributinformationen als einen Tunneleintrag ferner Folgendes umfasst:
Erlangen, durch die erste Netzvorrichtung von jeder dritten Netzvorrichtung über eine physikalische Verknüpfung zwischen der ersten Netzvorrichtung und der entsprechenden dritten Netzvorrichtung, eines Tunneleintrags, der einem Tunnel zwischen der entsprechenden dritten Netzvorrichtung und der Netzvorrichtung an dem zweiten Ort entspricht, und Speichern des erlangten Tunneleintrags.

10. Verfahren nach Anspruch 6, wobei die zweite Netzvorrichtung an einem dritten Ort eingesetzt wird, eine vierte Netzvorrichtung an dem zweiten Ort eingesetzt wird, die erste Netzvorrichtung und die vierte Netzvorrichtung auf ein erstes Transportnetz zugreifen und die zweite Netzvorrichtung und die vierte Netzvorrichtung auf ein zweites Transportnetz zugreifen und einen Tunnel herstellen.

11. Verfahren nach Anspruch 10, wobei das Verfahren nach dem Hinzufügen, durch die erste Netzvorrichtung, eines ersten Routing-Eintrags zu einer Routing-Tabelle der ersten Netzvorrichtung ferner Folgendes umfasst:
Erlangen (803), durch die erste Netzvorrichtung, von TNP-Informationen der vierten Netzvorrichtung, wobei die TNP-Informationen der vierten Netzvorrichtung dem ersten Transportnetz entsprechen;
Herstellen (804), durch die erste Netzvorrichtung, eines Tunnels zwischen der ersten Netzvorrichtung und der vierten Netzvorrichtung basierend auf den TNP-Informationen der vierten Netzvorrichtung; und
Speichern (805), durch die erste Netzvorrichtung, einer Tunnelkennung jedes hergestellten Tunnels und entsprechender Tunnelattributinformationen als einen Tunneleintrag.

12. Verfahren nach Anspruch 6, wobei die zweite Netzvorrichtung an einem dritten Ort eingesetzt wird, eine vierte Netzvorrichtung an dem zweiten Ort eingesetzt wird, die erste Netzvorrichtung, die zweite Netzvorrichtung und die vierte Netzvorrichtung alle auf ein erstes Transportnetz zugreifen und die zweite Netzvorrichtung und die vierte Netzvorrichtung auf ein zweites Transportnetz zugreifen und einen Tunnel herstellen.

13. Verfahren nach Anspruch 12, wobei das Verfahren nach dem Hinzufügen, durch die erste Netzvorrichtung, eines ersten Routing-Eintrags zu einer Routing-Tabelle der ersten Netzeinrichtung ferner Folgendes umfasst:
Erlangen (1003), durch die erste Netzvorrichtung, einer Ortskennung des dritten Ortes; und
Hinzufügen (1004), durch die erste Netzvorrichtung, eines zweiten Routing-Eintrags zu der Routing-Tabelle der ersten Netzvorrichtung, wobei der zweite Routing-Eintrag die Ortskennung des dritten Ortes und das Ortspräfix umfasst und der zweite Routing-Eintrag dazu verwendet wird, ein Datenpaket an die zweite Netzvorrichtung zu senden.

14. Verfahren nach Anspruch 12, wobei das Verfahren nach dem Hinzufügen, durch die erste Netzvorrichtung, eines zweiten Routing-Eintrags zu der Routing-Tabelle der ersten Netzvorrichtung ferner Folgendes umfasst:
Erlangen (1005), durch die erste Netzvorrichtung, von TNP-Informationen der zweiten Netzvorrichtung und TNP-Informationen der vierten Netzvorrichtung;
Herstellen (1006), durch die erste Netzvorrichtung, eines Tunnels zwischen der ersten Netzvorrichtung und der zweiten Netzvorrichtung und eines Tunnels zwischen der ersten Netzvorrichtung und der vierten Netzvorrichtung basierend auf den TNP-Informationen der zweiten Netzvorrichtung und den TNP-Informationen der vierten Netzvorrichtung; und
Speichern (1007), durch die erste Netzvorrichtung, einer Tunnelkennung jedes hergestellten Tunnels und entsprechender Tunnelattributinformationen als einen Tunneleintrag.

15. Netzvorrichtung, die auf eine erste Netzvorrichtung an einem ersten Ort angewandt wird, wobei die Netzvorrichtung dazu konfiguriert ist, das Verfahren nach einem der Ansprüche 1 bis 14 umzusetzen.

## Revendications

1. Procédé d'envoi de paquets, dans lequel le procédé est réalisé par un premier dispositif réseau, le premier dispositif réseau stocke une table de routage, la table de routage comprend une pluralité d'entrées de routage, chacune de la pluralité d'entrées de routage comprend un préfixe de site et un identifiant de site correspondant, et le procédé comprend :
la réception (201), par le premier dispositif réseau, d'un premier paquet de données, dans lequel le premier paquet de données transporte une adresse de destination, et le premier dispositif réseau est un dispositif réseau déployé sur un premier site ;
la détermination (202), par le premier dispositif réseau, d'une entrée de routage cible à partir de la table de routage sur la base de l'adresse de destination, dans lequel l'adresse de destination correspond à un préfixe de site compris dans l'entrée de routage cible, et un identifiant de site compris dans l'entrée de routage cible est utilisé pour identifier un deuxième site ; et
l'envoi (203), par le premier dispositif réseau, du premier paquet de données à un dispositif réseau déployé sur le deuxième site.

2. Procédé selon la revendication 1, dans lequel l'envoi, par le premier dispositif réseau, du premier paquet de données à un dispositif réseau déployé sur le deuxième site comprend :
la détermination, par le premier dispositif réseau, d'une ou plusieurs entrées de tunnel sur la base de l'identifiant de site compris dans l'entrée de routage cible, dans lequel les une ou plusieurs entrées de tunnel sont des entrées de tunnel correspondant à des tunnels établis entre le premier site et le deuxième site ;
la sélection, par le premier dispositif réseau, d'une entrée de tunnel à partir des une ou plusieurs entrées de tunnel comme entrée de tunnel cible ; et
l'envoi, par le premier dispositif réseau, du premier paquet de données par le biais d'un tunnel correspondant à l'entrée de tunnel cible.

3. Procédé selon la revendication 2, dans lequel le premier dispositif réseau stocke une table de tunnel, chaque entrée de tunnel de la table de tunnel comprend un identifiant de tunnel et des informations d'attribut de tunnel correspondantes, la table de tunnel stocke les entrées de tunnel correspondant à une pluralité de sites, la pluralité de sites sont des sites qui établissent des tunnels avec le premier site, et la pluralité de sites comprennent le deuxième site ; et
la détermination, par le premier dispositif réseau, d'une ou plusieurs entrées de tunnel sur la base de l'identifiant de site compris dans l'entrée de routage cible comprend :
la détermination, par le premier dispositif réseau, d'un ou plusieurs identifiants de tunnel sur la base de l'identifiant de site compris dans l'entrée de routage cible, dans lequel les un ou plusieurs identifiants de tunnel sont des identifiants des tunnels établis entre le premier site et le deuxième site ; et
la détermination, par le premier dispositif réseau, des une ou plusieurs entrées de tunnel à partir de la table de tunnel sur la base des un ou plusieurs identifiants de tunnel.

4. Procédé selon la revendication 2, dans lequel le premier dispositif réseau stocke une pluralité de tables de tunnel, la pluralité de tables de tunnel correspondent une à une à une pluralité de sites, la pluralité de sites sont des sites qui établissent des tunnels avec le premier site, et la pluralité de sites comprennent le deuxième site ; et
la détermination, par le premier dispositif réseau, d'une ou plusieurs entrées de tunnel sur la base de l'identifiant de site compris dans l'entrée de routage cible comprend :
la détermination, par le premier dispositif réseau, d'un identifiant d'une table de tunnel cible sur la base de l'identifiant de site compris dans l'entrée de routage cible, dans lequel la table de tunnel cible est une table de tunnel correspondant au deuxième site dans la pluralité de tables de tunnel ; et
la détermination, par le premier dispositif réseau, de la table de tunnel cible parmi la pluralité de tables de tunnel sur la base de l'identifiant de la table de tunnel cible, et la détermination des entrées de tunnel stockées dans la table de tunnel cible comme les une ou plusieurs entrées de tunnel.

5. Procédé selon l'une quelconque des revendications 2 à 4, dans lequel chacune des une ou plusieurs entrées de tunnel comprend également un identifiant de connexion, et l'identifiant de connexion est utilisé pour indiquer si un tunnel correspondant est connecté ; et
la sélection, par le premier dispositif réseau, d'une entrée de tunnel à partir des une ou plusieurs entrées de tunnel comme entrée de tunnel cible comprend :
la sélection, par le premier dispositif réseau, des entrées de tunnel avec des identifiants de connexion valides à partir des une ou plusieurs entrées de tunnel ; et
la sélection, par le premier dispositif réseau, d'une entrée de tunnel parmi les entrées de tunnel sélectionnées comme entrée de tunnel cible.

6. Procédé de génération d'entrées de routage, dans lequel le procédé est réalisé par un premier dispositif réseau, le premier dispositif réseau est déployé sur un premier site, et le procédé comprend :
l'obtention (601, 801, 1001), par le premier dispositif réseau, d'un préfixe de site et d'un identifiant de site, dans lequel l'identifiant de site est utilisé pour identifier un deuxième site, et une adresse réseau d'un deuxième dispositif réseau correspond au préfixe de site ; et
l'ajout (602, 802, 1002), par le premier dispositif réseau, d'une première entrée de routage à une table de routage du premier dispositif réseau, dans lequel la première entrée de routage comprend le préfixe de site et l'identifiant de site, et la première entrée de routage est utilisée pour envoyer un paquet de données au deuxième dispositif réseau.

7. Procédé selon la revendication 6, dans lequel le deuxième dispositif réseau est déployé sur le deuxième site, et le premier dispositif réseau et le deuxième dispositif réseau accèdent à un ou plusieurs mêmes réseaux de transport.

8. Procédé selon la revendication 7, dans lequel après l'ajout, par le premier dispositif réseau, d'une première entrée de routage à une table de routage du premier dispositif réseau, le procédé comprend également :
l'obtention (603), par le premier dispositif réseau, d'une ou plusieurs informations de port de réseau de transport, TNP, du deuxième dispositif réseau, dans lequel les une ou plusieurs informations TNP correspondent une à une aux un ou plusieurs réseaux de transport ;
l'établissement (604), par le premier dispositif réseau, d'un tunnel entre le premier dispositif réseau et le deuxième dispositif réseau sur la base des une ou plusieurs informations TNP ; et
le stockage (605), par le premier dispositif réseau, d'un identifiant de tunnel de chaque tunnel établi et des informations d'attribut de tunnel correspondantes en tant qu'entrée de tunnel.

9. Procédé selon la revendication 7, dans lequel un ou plusieurs troisièmes dispositifs réseau sont également déployés sur le premier site, chacun des un ou plusieurs troisièmes dispositifs réseau établit un tunnel avec un dispositif réseau du deuxième site, et chacun des un ou plusieurs troisièmes dispositifs réseau établit également une liaison physique avec le premier dispositif réseau ; et
après le stockage, par le premier dispositif réseau, d'un identifiant de tunnel de chaque tunnel établi et des informations d'attribut de tunnel correspondantes en tant qu'entrée de tunnel, le procédé comprend également :
l'obtention, par le premier dispositif réseau à partir de chaque troisième dispositif réseau par le biais d'une liaison physique entre le premier dispositif réseau et le troisième dispositif réseau correspondant, d'une entrée de tunnel correspondant à un tunnel entre le troisième dispositif réseau correspondant et le dispositif réseau du deuxième site, et le stockage de l'entrée de tunnel obtenue.

10. Procédé selon la revendication 6, dans lequel le deuxième dispositif réseau est déployé sur un troisième site, un quatrième dispositif réseau est déployé sur le deuxième site, le premier dispositif réseau et le quatrième dispositif réseau accèdent à un premier réseau de transport, et le deuxième dispositif réseau et le quatrième dispositif réseau accèdent à un second réseau de transport et établissent un tunnel.

11. Procédé selon la revendication 10, dans lequel après l'ajout, par le premier dispositif réseau, d'une première entrée de routage à une table de routage du premier dispositif réseau, le procédé comprend également :
l'obtention (803), par le premier dispositif réseau, d'informations TNP du quatrième dispositif réseau, dans lequel les informations TNP du quatrième dispositif réseau correspondent au premier réseau de transport ;
l'établissement (804), par le premier dispositif réseau, d'un tunnel entre le premier dispositif réseau et le quatrième dispositif réseau sur la base des informations TNP du quatrième dispositif réseau ; et
le stockage (805), par le premier dispositif réseau, d'un identifiant de tunnel de chaque tunnel établi et des informations d'attribut de tunnel correspondantes en tant qu'entrée de tunnel.

12. Procédé selon la revendication 6, dans lequel le deuxième dispositif réseau est déployé sur un troisième site, un quatrième dispositif réseau est déployé sur le deuxième site, le premier dispositif réseau, le deuxième dispositif réseau et le quatrième dispositif réseau accèdent tous à un premier réseau de transport, et le deuxième dispositif réseau et le quatrième dispositif réseau accèdent à un second réseau de transport et établissent un tunnel.

13. Procédé selon la revendication 12, dans lequel après l'ajout, par le premier dispositif réseau, d'une première entrée de routage à une table de routage du premier dispositif réseau, le procédé comprend également :
l'obtention (1003), par le premier dispositif réseau, d'un identifiant de site du troisième site ; et
l'ajout (1004), par le premier dispositif réseau, d'une seconde entrée de routage à la table de routage du premier dispositif réseau, dans lequel la seconde entrée de routage comprend l'identifiant de site du troisième site et le préfixe de site, et la seconde entrée de routage est utilisée pour envoyer un paquet de données au deuxième dispositif réseau.

14. Procédé selon la revendication 12, dans lequel après l'ajout, par le premier dispositif réseau, d'une seconde entrée de routage à la table de routage du premier dispositif réseau, le procédé comprend également :
l'obtention (1005), par le premier dispositif réseau, d'informations TNP du deuxième dispositif réseau et d'informations TNP du quatrième dispositif réseau ;
l'établissement (1006), par le premier dispositif réseau, d'un tunnel entre le premier dispositif réseau et le deuxième dispositif réseau et d'un tunnel entre le premier dispositif réseau et le quatrième dispositif réseau sur la base des informations TNP du deuxième dispositif réseau et des informations TNP du quatrième dispositif réseau ; et
le stockage (1007), par le premier dispositif réseau, d'un identifiant de tunnel de chaque tunnel établi et des informations d'attribut de tunnel correspondantes en tant qu'entrée de tunnel.

15. Dispositif réseau, appliqué à un premier dispositif réseau sur un premier site, dans lequel le dispositif réseau est configuré pour mettre en œuvre le procédé selon l'une quelconque des revendications 1 à 14.
